# EUROPEAN PATENT APPLICATION

(11) **EP 4 579 560 A1**
(43) Date of publication of application: **02.07.2025**
(21) Application number: 24207780.8
(22) Date of filing: 21.10.2024
(51) Int. Cl.: G06Q 30/0251, G06Q 30/0601, H04L 67/306, H04W 4/02

(54) **INFORMATION PROVIDING APPARATUS AND INFORMATION PROVIDING METHOD**

(30) Priority: 25.12.2023 JP 2023217718
(71) Applicant: Hitachi, Ltd., Tokyo 100-8280 (JP)
(72) Inventor: HIRAMATSU, Yoshitaka, Tokyo, 100-8280 (JP); ISHII, Kenta, Tokyo, 100-8280 (JP); YOSHIJI, Kie, Tokyo, 100-8280 (JP); OKITA, Hideki, Tokyo, 100-8280 (JP)
(74) Representative: Manitz Finsterwald Patent- und Rechtsanwaltspartnerschaft mbB

(57) **Abstract**

An information providing apparatus stores selection information indicating a visit target selected by a first user and visit request information indicating a visit target that each of the first user and a related user who has a relationship with the first user requests to visit, specifies a related user who requests to visit the selected visit target, from visit request information, generates disclosure information regarding the specified related user, the disclosure information being disclosed to the first user to a degree of disclosure according to a registration status regarding the selected visit target of the first user in the visit request information, and generates data for displaying the generated disclosure information.

## Description

### BACKGROUND OF THE INVENTION

### 1. Field of the Invention

The present invention relates to an information providing apparatus and an information providing method.

### 2. Description of Related Art

JP2022-190588A (Patent Document 1) is provided as the background art of this technical field. An information providing apparatus described in Patent Document 1 associates and stores, for each spot that is registered according to an operation of a user and is concerned about by the user, information regarding an evaluation of the spot, in a case where an update request for the information regarding the evaluation of the spot is received, updates the information regarding the evaluation, and transmits information of the spot about which the information regarding the evaluation is updated, to a user terminal of another user corresponding to attribute information identical or similar to attribute information of the user who has registered the spot.

The information processing apparatus described in Patent Document 1 executes processing of transmitting spot information of which the evaluation is updated by the user, to another user who has the identical or similar attribute; however, it is difficult to obtain an effect of promoting the user and a specific user who has a relationship with the user to visit the spot together by the processing.

### SUMMARY OF THE INVENTION

Accordingly, an aspect of the invention promotes a user and a specific user who has a relationship with the user to visit a visit target together.

To solve the above-described problem, an aspect of the invention employs the following configuration. An information providing apparatus includes a processor and a memory, in which the memory stores selection information indicating a visit target selected by a first user and visit request information indicating a visit target that each of the first user and a related user who has a relationship with the first user requests to visit, and the processor specifies a related user who requests to visit the selected visit target, from the visit request information, generates disclosure information regarding the specified related user, the disclosure information being disclosed to the first user to a degree of disclosure according to a registration status regarding the selected visit target of the first user in the visit request information, and generates data for displaying the generated disclosure information.

According to the aspect of the invention, it is possible to promote the user and the specific user who has a relationship with the user, to visit the visit target together.

Problems, configurations, and effects other than those described above will become apparent from the description of the following embodiments.

### BRIEF DESCRIPTION OF THE DRAWINGS

FIG. 1 is an explanatory view illustrating a configuration example of an information providing system in Example 1;
FIG. 2 is a block diagram illustrating a hardware configuration example of an information processing apparatus in Example 1;
FIG. 3 is a block diagram illustrating a logical configuration example of the information processing apparatus in Example 1;
FIG. 4 is a diagram illustrating a data configuration example of spot information in Example 1;
FIG. 5 is a diagram illustrating a data configuration example of event information in Example 1;
FIG. 6 is a diagram illustrating a data configuration example of user characteristic information in Example 1;
FIG. 7 is a diagram illustrating a data configuration example of a positional information history DB in Example 1;
FIG. 8 is a diagram illustrating a data configuration example of a spot visit history DB in Example 1;
FIG. 9 is a diagram illustrating a data configuration example of a visit request information DB in Example 1;
FIG. 10 is a diagram illustrating a data configuration example of related user information in Example 1;
FIG. 11 is a block diagram illustrating a logical configuration example of a user terminal in Example 1;
FIG. 12A is a flowchart illustrating an example of information providing processing in Example 1;
FIG. 12B is a flowchart illustrating an example of the information providing processing in Example 1;
FIG. 13 is a diagram illustrating a screen configuration example of a list screen in Example 1;
FIG. 14 is a diagram illustrating a screen configuration example of spot detail information screen in Example 1;
FIG. 15 is a diagram illustrating a screen configuration example of a spot detail information screen in Example 1;
FIG. 16 is a diagram illustrating a screen configuration example of a spot detail information screen in Example 1;
FIG. 17 is a flowchart illustrating an example of information providing processing in a case where there is no related user who requests to visit a spot selected by a user, in Example 1;
FIG. 18 is a diagram illustrating a screen configuration example of a spot detail information screen in Example 1;
FIG. 19 is a diagram illustrating a screen configuration example of a spot visit request notification screen in Example 1;
FIG. 20 is a flowchart illustrating an example of information providing processing in a case where an access request to detail information of an event is made, in Example 1;
FIG. 21 is a diagram illustrating a screen configuration example of an event detail information screen in Example 1;
FIG. 22 is a diagram illustrating a screen configuration example of an event detail information screen in Example 1;
FIG. 23 is a flowchart illustrating an example of information providing processing in a case where there is no related user who requests to visit an event selected by the user, in Example 1;
FIG. 24 is a diagram illustrating a screen configuration example of an event detail information screen in Example 1;
FIG. 25 is a diagram illustrating a screen configuration example of an event visit request notification screen in Example 1; and
FIG. 26 is a diagram illustrating a data configuration example of user style information in Example 1.

### DESCRIPTION OF EMBODIMENTS

Hereinafter, an embodiment of the invention will be described in detail based on the drawings. In the present embodiment, the same configurations are denoted by the same reference numerals, and duplicate description will be omitted. It should be noted that the present embodiment is merely an example for realizing the invention, and does not limit the technical scope of the invention.

### [Example 1]

### <Configuration Example of Information Providing System>

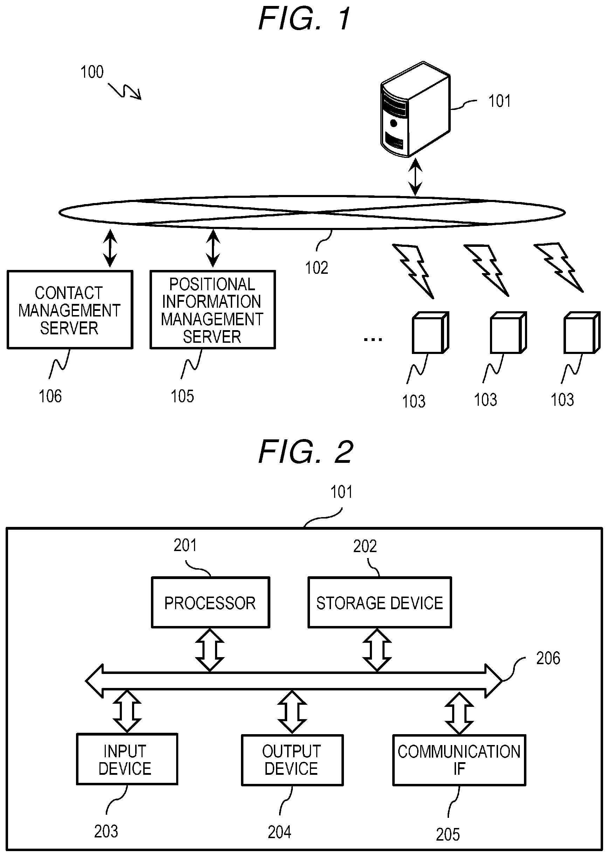

FIG. 1 is an explanatory view illustrating a configuration example of an information providing system. An information providing system 100 includes, for example, an information processing apparatus 101, a user terminal 103, a positional information management server 105, and a contact management server 106 capable of communicating with each other via a wired or wireless network 102.

The user terminal 103 is, for example, a portable computer or a smartphone that is operated by a user. Hereinafter, the term "user" indicates a user of the user terminal 103. The positional information management server 105 is a computer that manages a history of positional information of the user. The positional information management server 105 receives positional information described below from the user terminal 103.

The information processing apparatus 101 receives positional information of the user terminal 103 from the positional information management server 105. The contact management server 106 is a computer that manages contacts of a user (hereinafter, simply referred to as a related user) who has a relationship (for example, interacts) with each user. The contact management server 106 receives a contact of the related user of the user of the user terminal 103 from the user terminal 103. The information processing apparatus 101 receives contact information from the contact management server 106.

### <Configuration Example of Information Processing Apparatus 101>

FIG. 2 is a block diagram illustrating a hardware configuration example of the information processing apparatus 101. The information processing apparatus 101 is configured with, for example, a computer including a processor 201, a storage device 202, an input device 203, an output device 204, and a communication interface 205 capable of communicating with each other via a bus 206. The number of components is freely selected. For example, the information processing apparatus 101 may include a plurality of processors 201 and a plurality of storage devices 202. The storage device 202 may be a configuration independent of the information processing apparatus 101.

The processor 201 controls the information processing apparatus 101. The processor 201 executes a program stored in the storage device 202. The storage device 202 includes, for example, a memory such as a read only memory (ROM) that is a non-volatile storage element and a random access memory that is a volatile storage element. The ROM stores an unchangeable program (for example, a basic input/output system (BIOS)) and the like. The RAM is a high-speed and volatile storage element such as a dynamic random access memory (DRAM), and temporarily stores the program that is executed by the processor 201 and data that is used when the program is executed.

The storage device 202 includes, for example, a large-capacity and non-volatile auxiliary storage device such as a magnetic storage device (hard disk drive (HDD)) or a flash memory (solid state drive (SSD)). The auxiliary storage device stores the program that is executed by the processor 201 and data that is used when the program is executed. That is, the program is read out from the auxiliary storage device, is loaded into the memory, and is executed by the processor 201.

The input device 203 receives an input operation on the information processing apparatus 101 from the user or an input of data from the outside. The input device 203 includes, for example, a keyboard, a mouse, a touch panel, a numeric keypad, and a scanner. The output device 204 outputs an execution result of the program in a format visually recognizable to the user. The output device 204 includes, for example, a display and a printer. The communication interface 205 controls communication with another apparatus via the network 102 according to a prescribed protocol. The communication interface 205 may include, for example, a serial interface such as a universal serial bus (USB).

A part or the whole of the program that is executed by the processor 201 may be provided from a removable medium (CD-ROM, flash memory, or the like) which is a non-transitory storage medium or an external computer including a non-transitory storage device to the information processing apparatus 101 via the network 102 and may be stored in the non-volatile storage device 202 (auxiliary storage device) that is a non-transitory storage medium. For this reason, the information processing apparatus 101 may have an interface that reads data from the removable medium.

The information processing apparatus 101 is a computer system that is configured on one computer physically or a plurality of computers configured logically or physically, and may operate in separate threads on the same computer or may operate on a virtual computer constructed on a plurality of physical computer resources.

For example, the hardware configurations of the positional information management server 105 and the contact management server 106 are similar to the hardware configuration of the information processing apparatus 101, and description will be omitted.

### <Logical Configuration Example of Information Processing Apparatus 101>

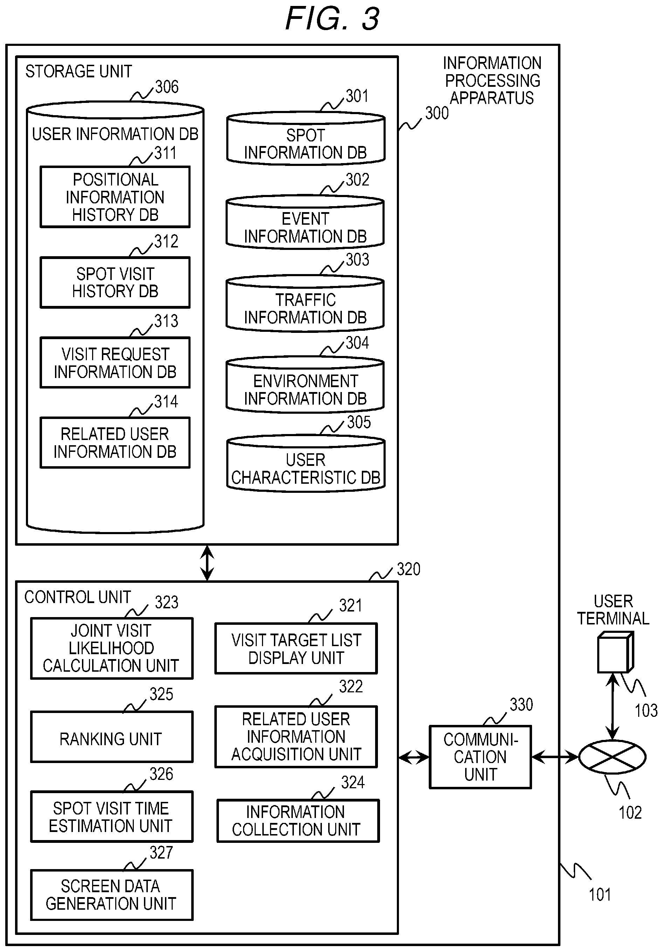

FIG. 3 is a block diagram illustrating a logical configuration example of the information processing apparatus 101. The information processing apparatus 101 includes, for example, a storage unit 300, a control unit 320, and a communication unit 330.

The storage unit 300 is realized by a storage area provided by the storage device 202, and stores various kinds of information. For example, the storage unit 300 stores various kinds of information collected, processed, and analyzed by the information processing apparatus 101, and position history information of the user provided from the positional information management server 105. In addition, the storage unit 300 stores the program, parameters, and the like that are used by the information processing apparatus 101.

The storage unit 300 stores a spot information database (DB) 301, an event information DB 302, a traffic information DB 303, an environment information DB 304, a user characteristic DB 305, and a user information DB 306. The user information DB 306 includes a positional information history DB 311, a spot visit history DB 312, a visit request information DB 313, and a related user information DB 314.

Information that is stored in the storage unit 300 is not limited to the above-described information. Details of information stored in various DBs will be described below. In the present embodiment, information that is used by the information providing system 100 may be expressed by any data structure without depending on the data structure. For example, a data structure appropriately selected from a table, a list, a database, or a queue may store information.

The control unit 320 executes control of the start or stop of each functional unit, inputs data that the communication unit 330 receives from the user terminal 103, the positional information management server 105, the contact management server 106, or the like to the functional unit, and transmits data output from the functional unit to the user terminal 103, the positional information management server 105, or the contact management server 106 via the communication unit 330.

The control unit 320 includes, for example, a visit target list display unit 321, a related user information acquisition unit 322, a joint visit likelihood calculation unit 323, an information collection unit 324, a ranking unit 325, a spot visit time estimation unit 326, and a screen data generation unit 327 all of which are functional units. Processing that is executed by each functional unit will be described below.

Processing by the control unit 320 and each functional unit included in the control unit 320 is realized by the processor 201 executing a program. For example, the processor 201 functions as the visit target list display unit 321 by operating according to a visit target list display program loaded into the memory included in the storage device 202, and functions as the related user information acquisition unit 322 by operating according to a related user information acquisition program loaded into the memory. The control unit 320 and other functional units have a similar relationship with the programs. A control unit 1101 of the user terminal 103 described below has a similar relationship with programs.

The communication unit 330 is realized by the communication interface 205, and transmits and receives data to and from the user terminal 103, the positional information management server 105, or the contact management server 106 via the network 102.

### <Spot Information DB 301>

The spot information DB 301 stores spot information that is information regarding a spot. The spot information includes, for example, information collected from a website regarding an event on the Internet by the information collection unit 324 or information input from an operator or the like of a spot. The website regarding the spot includes, for example, an official website of the spot, a summary website regarding the spot, or an outing information website.

The spot is an example of a visit target as a target that the user can visit, and is an example of a first visit target. In the spot, a holding period is not determined. That is, the spot is a target that the user can visit regardless of the period (note that business hours or a temporary rest period such as a regular holiday may be present).

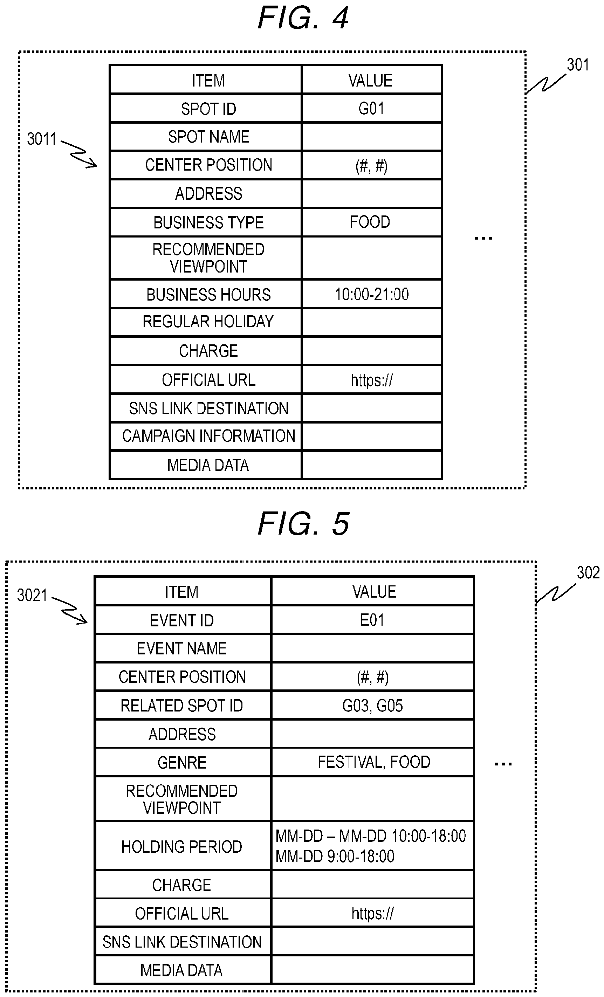

FIG. 4 is a diagram illustrating a data configuration example of spot information 3011 stored in the spot information DB 301. In the spot information DB 301, the spot information 3011 of each "spot identifier (ID)" that is an identifier for uniquely specifying a spot is stored.

The spot information 3011 includes "spot ID", "spot name", "center position" of a spot, "address" of a spot, "business type" of a spot, "recommended viewpoint" of a spot, "business hours" of a spot, "regular holiday" of a spot, "charge" regarding the use of a spot, "official uniform resource locator (URL)" of a spot, "social network service (SNS) link destination" of a spot, "campaign information" of a spot, and "media data" such as images, videos, voice of a spot. Information included in the spot information 3011 is not limited to such information.

### <Event Information DB>

The event information DB 302 stores event information that is information regarding an event. The event information includes, for example, information collected from a website regarding an event on the Internet by the information collection unit 324, or information input from an organizer or the like of an event. The website regarding the event includes, for example, an official website of the event, a summary website regarding various events, and an outing information website.

The event is an example of a visit target, and is an example of a second visit target. For each event, an area to be held may be determined, and one or more spots (hereinafter, also referred to as related spots) are included in the holding area of the event. In the event, a specific holding period is determined. That is, the event is a target that the user can visit only in the specific period.

FIG. 5 is a diagram illustrating a data configuration example of event information 3021 stored in the event information DB 302. In the event information DB 302, the event information 3021 of each "event ID" that is an identifier for uniquely specifying an event is stored.

The event information 3021 includes, for example, "event ID", "event name", "center position" representing a representative position of a spot or an area where an event is held, "related spot ID" that is an identifier for uniquely specifying a related spot of an event, "address" of a spot or an area where an event is held, "genre" of an event, "recommended viewpoint" of an event, "holding period" of an event, "charge" regarding participation in an event, "official URL" of an event, "SNS link destination" of an event, and "media data" such as images, video, or voice of an event. In the "related spot ID", the "spot ID" is set in the spot information 3011 of the related spot. Information included in the event information 3021 is not limited to such information.

### <Traffic Information DB 303>

The traffic information DB 303 stores traffic information that is information regarding traffic. The traffic information includes, for example, information collected from a website regarding traffic on the Internet by the information collection unit 324 or information input from an operator or the like of transport. Information collected from the website regarding traffic includes, for example, information regarding the transport posted on an official website or the like of the transport or information regarding roads posted on an official website or the like of an organization that manages roads.

A data configuration example of the traffic information is not illustrated. The traffic information includes, for example, a traffic ID that is an identifier for uniquely specifying transport and information regarding operation statuses, schedules, and congestion of transport such as train, bus, plane, taxi, and ferry. In addition, the traffic information may include, for example, road information including traffic congestion information and information regarding construction and accident. Information included in the traffic information is not limited to such information.

### <Environment Information DB 304>

The environment information DB 304 stores environment information that is information regarding the environment. The environment information includes, for example, information collected from a website regarding weather or disaster on the Internet by the information collection unit 324 or information input from an employee or the like of a weather company.

A data configuration example of the environment information is not illustrated. The environment information includes, for example, weather information such as weather, temperature, wind speed, hours of sunshine, and pollen count associated with positional information and disaster information such as earthquake, tsunami, heavy rain, flood, and fire associated with positional information. Information included in the environment information is not limited to such information.

### <User Characteristic DB 305>

The user characteristic DB 305 stores user characteristic information that is information regarding user characteristic. The user characteristic indicates the characteristic of a cluster of users with similar activity histories. For example, the user characteristic information is generated by generating clusters of users with similar activity histories using attribute information of the users, the spot visit history DB 312, or the positional information history DB 311, or the like in the user information stored in the user information DB 306, and extracting the characteristic of each generated cluster.

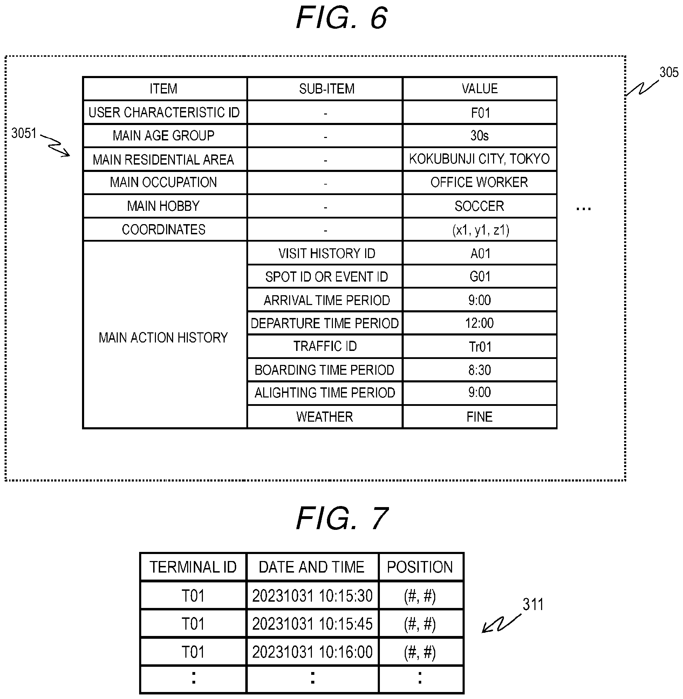

FIG. 6 is a diagram illustrating a data configuration example of user characteristic information 3051 stored in the user characteristic DB 305. In the user characteristic DB 305, the user characteristic information 3051 of each "user characteristic ID" that is an identifier for uniquely specifying (a cluster corresponding to) a user characteristic is stored.

The user characteristic information 3051 includes, for example, "user characteristic ID", "main age group" of a cluster corresponding to a user characteristic ID, "main residential area" of the cluster, "main occupation" of the cluster, "main hobby" of the cluster, "main action history" of the cluster, and "coordinates" (for example, coordinates of the center of gravity) of the cluster in a space where clustering is performed.

The "main action history" includes, as sub-items, for example, "visit history ID", "spot ID or event ID", "spot arrival time period", "spot departure time period", "traffic ID", "boarding time period", "alighting time period", and "weather". The visit history ID is an identifier for uniquely specifying a visit history. In the "spot ID or event ID", the spot ID is an identifier for uniquely specifying a spot, and the spot ID included in the spot information 3011 is used. In the "spot ID or event ID", the event ID is an identifier for uniquely specifying an event, and the event ID included in the event information 3021 is used. The traffic ID is an identifier for uniquely specifying traffic, and the traffic ID included in the traffic information is used.

In information other than the user characteristic ID included in the user characteristic information 3051, a value of a user who represents the cluster may be stored or a prescribed statistic value (for example, a mode or an average value) of all users of the cluster may be stored. Information included in the user characteristic information 3051 is not limited to such information.

### <User Information DB 306>

The user information DB 306 stores various kinds of information regarding the user including the user information. The user information includes, for example, information in which "user ID" for uniquely specifying a user, a physical feature (for example, height, weight, body fat, blood pressure, face image, and voice feature) of the user, an attribute (for example, name, family relationship, sex, age, date of birth, educational background, work history, and address) of the user, and "user characteristic ID" of a user characteristic (that is, a cluster in which the user is included) of the user are associated with one another. The user information is not illustrated.

The user information DB 306 includes the positional information history DB 311 that stores positional information regarding a position history of a user, a spot visit history DB 312 that stores a visit history of a user to a spot, the visit request information DB 313 that stores information on a spot or an event to which a user wants to go in the future, and the related user information DB 314 that stores information of a related user.

### <Positional Information History DB 311>

FIG. 7 is a diagram illustrating a data configuration example of the positional information history DB 311. In the positional information history DB 311, positional information in which "terminal ID" that is an identifier for uniquely specifying user terminal 103, "date and time" (hereinafter, it is assumed that the date and time is a value expressed in a form of year, month, day, hour, minute, and second) on which the position of the user terminal 103 is measured, and "position" indicating latitude and longitude measured by the user terminal 103 are associated with one another is stored. In a case where one user is operating one user terminal 103, the "terminal ID" is synonymous with the user ID for uniquely specifying the user. In a case where the user and the user terminal 103 do not correspond to each other on a one-to-one basis, the storage unit 300 may store correspondence information of the user ID and the terminal ID. In the drawing, "#" indicates different numerical values in an omitted manner.

### <Spot Visit History DB 312>

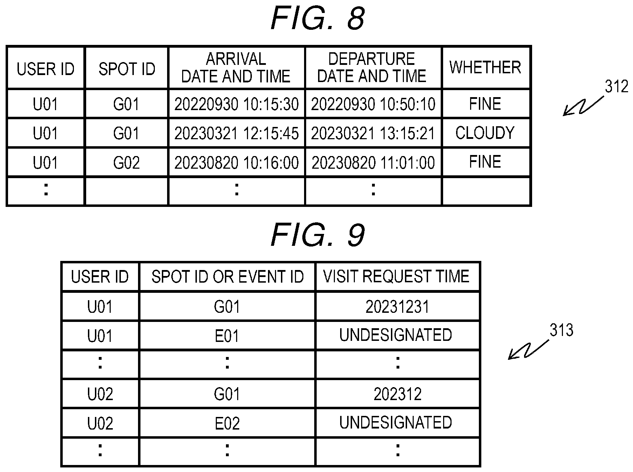

FIG. 8 is a diagram illustrating a data configuration example of the spot visit history DB 312. In the spot visit history DB 312, spot visit information in which "user ID" of a user, "spot ID" of a spot that the user visits, "arrival date and time" on which the user has arrived at the spot, "departure date and time" on which the user has departed from the spot after having arrived at the spot, and "weather" of the spot between the arrival date and time and the departure date and time extracted from the environment information DB 304 are associated with one another is stored.

The user ID associated with the terminal ID included in the positional information is used in the "user ID" of the spot visit information. The "spot ID" included in the spot information 3011 is used in the "spot ID" of the spot visit information.

The spot visit information is generated, for example, using the positional information stored in the positional information history DB 311, the spot information 3011 stored in the spot information DB 301, and the environment information stored in the environment information DB 304.

A specific example of a method for generating the spot visit information will be described. First, the information collection unit 324 determines whether each position that is indicated by the positional information stored in the positional information history DB 311 is within a prescribed range from a center position of each spot indicated by the spot information 3011.

In a case where determination is made that any position indicated by the positional information is within the prescribed range from the center position of any spot, the information collection unit 324 acquires the "terminal ID" and the "date and time" corresponding to the position from the positional information, sets the user ID corresponding to the acquired "terminal ID" as the "user ID" of the spot visit information, sets the acquired "date and time" as the "arrival date and time" of the spot visit information, and sets the "spot ID" of the spot indicated by the spot information 3011 as the "spot ID" of the spot visit information.

In addition, the information collection unit 324 specifies "date and time" on which the position of the terminal ID is out of the prescribed range from the center position of the spot initially after the date and time, with reference to the positional information, and sets the specified "date and time" as the "departure date and time" of the spot visit information. With this, the information collection unit 324 can generate a record of the spot visit history DB 312.

### <Visit Request Information DB>

FIG. 9 is a diagram illustrating a data configuration example of the visit request information DB 313. In the visit request information DB 313, visit request information in which "user ID" of a user, "spot ID or event ID" that is an ID of one of a spot or an event that the user wants to go, and "visit request time" that is date and time on which the user wants to go to the spot or the event or date and time on which it is estimated that the user wants to go to the spot or the event are associated with one another is stored. The visit request information is set in advance, for example, with reception of an input to the user terminal 103 by each user in the information processing apparatus 101.

The user ID associated with the terminal ID included in the positional information is used in the "user ID" of the visit request information. The "spot ID" included in the spot information 3011 or the "event ID" included in the event information 3021 is used in the "spot ID or event ID" of the visit request information. In the "visit request time" of the visit request information, date and time or a time (for example, a time is defined in the unit of date, month, year, or the like), or "undesignated" indicating that there is no specific time or date and time on which the user wants to go to a spot or an event (the user may go to a spot or an event at any time) is set.

Since an event has a limited holding period and a visit is possible only during the holding period, in the visit request information DB 313, only "undesignated" may be set as the visit request time for the event ID, or the holding period of the event indicated by the event information 3021 may be automatically set.

In regard to the visit request information in which the visit request time has passed, the visit request time may be automatically replaced with "undesignated" or the visit request information may be automatically deleted. The visit request information of an event of which the holding period has passed may be automatically deleted.

### <Related User Information DB 314>

The related user information DB 314 stores related user information that is information regarding a related user.

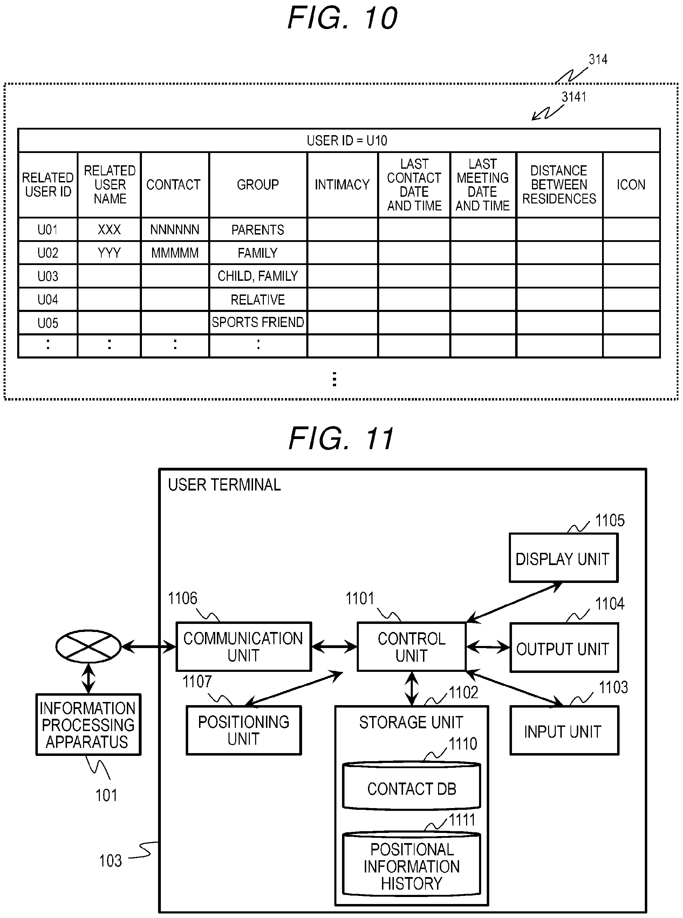

FIG. 10 is a diagram illustrating a data configuration example of related user information 3141 stored in the related user information DB 314. In the related user information DB 314, the related user information 3141 of each "user ID" (that is, each user) is stored.

The related user information 3141 of each user includes "user ID" of the user, "related user ID" that is the user ID of a related user of the user, "related user name" that is a name of the related user, "contact" that is the contact of the related user, "group" that is a name of a group to which the related user belongs, "intimacy" that is a numerical value or a level (index) representing intimacy between the user and the related user, "last contact date and time" that is latest date and time on which the user and the related user have kept in touch with each other, "last meeting date and time" that is latest date and time on which the user and the related user have met, "distance between residences" that is a distance between residences of the user and the related user, and "icon" of the related user.

As the "user ID" and the "related user ID" in the related user information 3141, the user ID associated with the terminal ID included in the positional information is used. As the "related user name", for example, the name of the related user included in the contact information of the related user transmitted from the contact management server 106 is used.

As the "contact", for example, the contact of the related user transmitted from the contact management server 106 is used. As the "group", for example, a name set by the related user with the user terminal 103 or a name of a group to which the user and the related user belong, held by message transmission means in the user terminal 103 is used.

As the "intimacy", for example, a value calculated from a contact frequency, last contact date and time, and/or last meeting date and time of the user and the related user (for example, a value that is obtained by substituting the contact frequency, the last contact date and time, and/or the last meeting date and time in a prescribed function, and is higher (indicating that the user and the related user are more intimate) as the contact frequency is higher, as the last contact date and time is closer to the current time, and as the last meeting date and time is closer to the current time) (in a period of a prescribed length ascended from a current time) or a value set by the user for each "group" of the related user is used. The value of the "intimacy" may be set by the user.

As the "last contact date and time", for example, communication date and time closest to the current time in a communication history between the user and the related user transmitted from the user terminal 103 of the user is used. The above-described contact frequency can be calculated from the communication history. As the "last meeting date and time", for example, a latest time at which a distance between a position corresponding to the terminal ID of the user and a position corresponding to the terminal ID of the related user indicated by the positional information is within a prescribed value is used. As the "distance between residences", for example, a distance between the residence of the user and the residence of the related user is used. The residences may be set by the user or may be calculated by applying a position history corresponding to the terminal ID of the user and a position history corresponding to the terminal ID of the related user indicated by the positional information to a prescribed algorithm. As the "icon", an image set by the related user is used. Note that an image set by the user such that the user identifies the related user may be used.

### <Logical Configuration Example of User Terminal 103>

FIG. 11 is a block diagram illustrating a logical configuration example of the user terminal 103. The user terminal 103 includes, for example, a control unit 1101, a storage unit 1102, an input unit 1103, an output unit 1104, a display unit 1105, a communication unit 1106, and a positioning unit 1107.

The control unit 1101 controls each configuration included in the user terminal 103. The control unit 1101 is realized by a processor such as a central processing unit (CPU). The control unit 1101 controls the start or stop of each configuration by executing a program stored in the storage unit 1102. The control unit 1101 controls an output of the output unit 1104 or the display unit 1105 using a control signal generated by the control unit 1101.

The control unit 1101 generates visual information output to the display unit 1105 and voice information and vibration information output to the output unit 1104 using an analysis result of information or a message received from the information processing apparatus 101 via the communication unit 1106, information stored in the storage unit 1102, and/or an analysis result of an input operation from the user received by the input unit 1103.

The control unit 1101 analyzes an input operation from the user received by the input unit 1103 and transmits information obtained by analysis to the information processing apparatus 101 via the communication unit 1106. Information transmitted to the information processing apparatus 101 by the control unit 1101 includes, for example, the visit request information.

The control unit 1101 transmits a positional information history 1111 measured by the positioning unit 1107 and stored in the storage unit 1102 to the positional information management server 105 via the communication unit 1106 under approval of the user.

The control unit 1101 analyzes an input operation from the user received by the input unit 1103 and stores the obtained contact information of the related user in a contact DB 1110 of the storage unit 1102. The control unit 1101 transmits the contact DB 1110 stored in the storage unit 1102 to the contact management server 106 via the communication unit 1106 under approval of the user.

The storage unit 300 is realized by a storage area provided by the storage device 202 and stores various kinds of information. For example, the storage unit 300 stores various kinds of information collected, processed, or analyzed by the information processing apparatus 101 and position history information of the user provided by the positional information management server 105. The storage unit 300 stores the programs, parameters, and the like that are used by the information processing apparatus 101.

The storage unit 1102 is realized by a storage area provided by hardware such as a memory or an auxiliary storage device and stores various kinds of information. The storage unit 1102 includes a work area of the control unit 1101. The storage unit 1102 stores various programs that are executed by the control unit 1101, parameters, and data. The storage unit 1102 stores the contact DB 1110 in which contacts of acquaintances of the user are included and the positional information history 1111 in the group of the positional information of the user terminal 103. Hardware that realizes the storage unit 1102 includes, for example, a memory such as a ROM and a RAM and an auxiliary storage device such as an HDD and a flash memory.

The input unit 1103 receives an input operation from the user. For example, when detail information of a spot or an event is displayed on the display unit 1105, the input unit 1103 receives a selection operation of a button displayed on a screen, so that information indicating that the user wants to go to the spot or the event is registered. Hardware that realizes the input unit 1103 includes, for example, a keyboard, a mouse, a touch panel, a numeric keypad, a scanner, and a microphone.

The output unit 1104 outputs sound, vibration, or the like. For example, the output unit 1104 outputs information regarding a spot or an event by voice output or outputs sound effect or vibration when the information processing apparatus 101 notifies the user of a notice. Hardware that realizes the output unit 1104 includes, for example, a speaker and a vibrator.

The display unit 1105 outputs visual information such as an image or text. For example, the display unit 1105 outputs a list screen of spots or events matching the intention of the user or detail information of a spot or an event. Hardware that realizes the display unit 1105 includes, for example, a liquid crystal display (LCD) device an organic light emitting diode (OLED) device, and a touch panel. The display unit 1105 may output visual information by a projection function.

The communication unit 1106 transmits and receives data to and from the information processing apparatus 101, the positional information management server 105, or the contact management server 106 via the network 102. The communication unit 1106 is realized by, for example, a communication interface device.

The positioning unit 1107 measures the position of the user terminal 103. The positioning unit 1107 is realized by, for example, an antenna that receives a signal from a global navigation satellite system (GNSS) and a processing circuit that processes the received signal. In general, positioning by the GNSS is commonly used as positioning by a global positioning system (GPS). The positioning unit 1107 may perform positioning processing by another positioning system such as base station positioning.

### <Information Providing Processing>

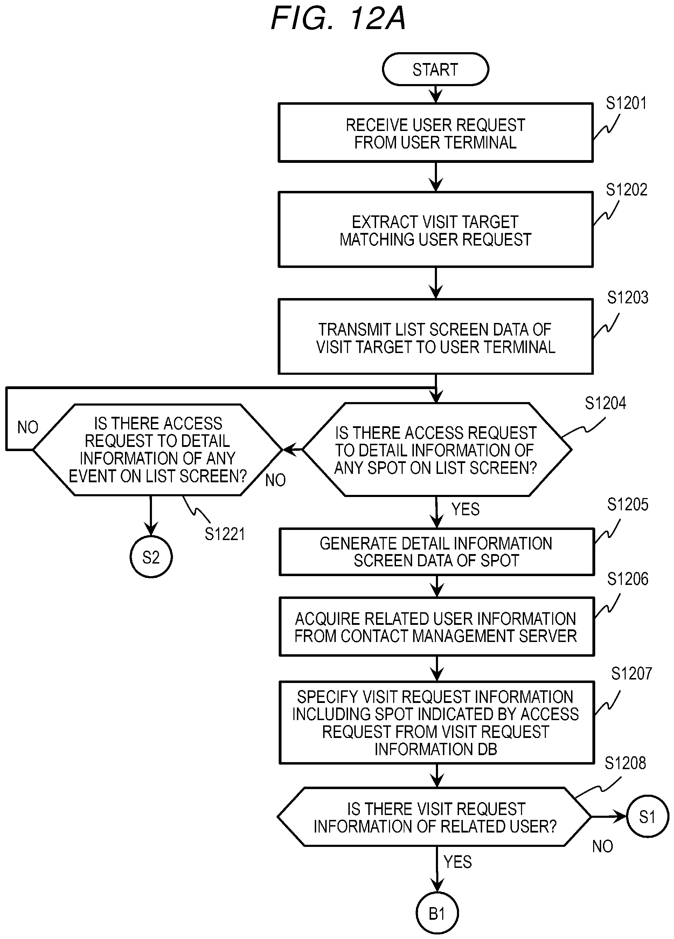

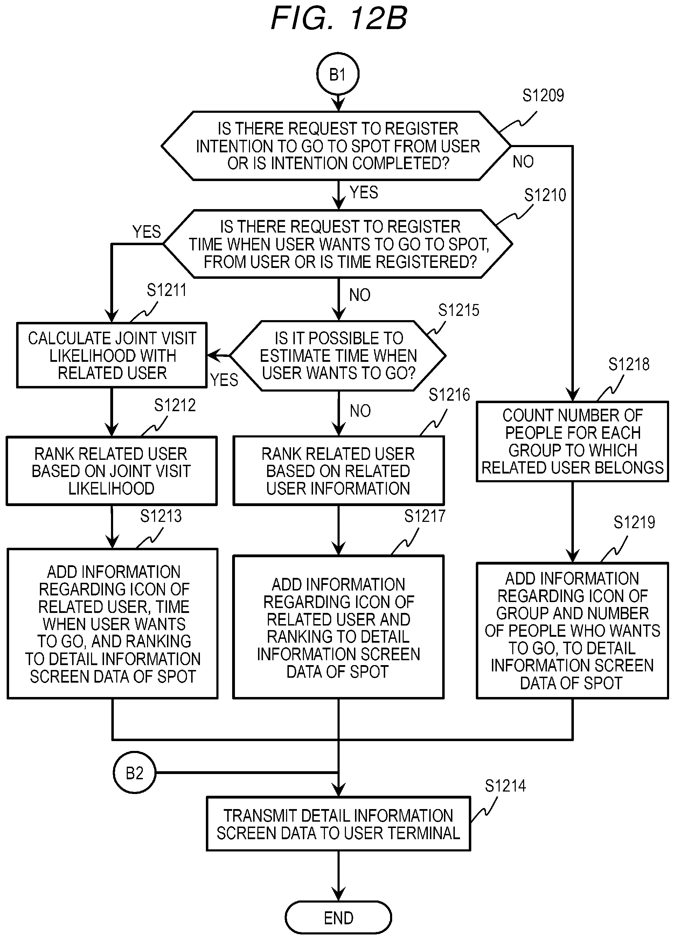

FIGS. 12A and 12B are flowcharts illustrating an example of information providing processing by the information processing apparatus 101. The visit target list display unit 321 receives a request transmitted from the user terminal 103 (S1201). In the request, a search condition for searching for a visit target for which the user requests list display is included. As the search condition, for example, a name or an ID (spot ID or event ID) of the visit target, an area to which the visit target belongs, a business type or a genre of the visit target, a classification (for example, spot and event) of the visit target, and a utilization method of the user characteristic (for example, to conform to the user characteristic (of the user) and not to conform to the user characteristic (of the user)) can be designated.

The visit target list display unit 321 extracts a visit target matching the search condition included in the received request (S1202). In a case where designation of an area is included in the search condition, the visit target list display unit 321 extracts a visit target of which the center position is in the designated area, from the spot information 3011 and the event information 3021. In a case where designation of a business type or a genre is included in the search condition, the visit target list display unit 321 extracts a visit target including the designated business type or genre from the spot information 3011 and the event information 3021.

In a case where designation of a classification of a visit target is included in the search condition, and the designated classification is a spot, the visit target list display unit 321 has only the spot information 3011 as a search range, that is, extracts only a spot. In a case where designation of a classification of a visit target is included in the search condition, and the designated classification is an event, the visit target list display unit 321 has only the event information 3021 as a search range, that is, extracts only an event.

In a case where designation of a utilization method of a user characteristic is included in the search condition, and the designated utilization method of the user characteristic is "to conform to the user characteristic", the visit target list display unit 321 specifies the spot ID and the event ID included in the main action history of the user characteristic information 3051 of the user characteristic ID corresponding to the user, specifies the business type corresponding to the spot ID from the spot information 3011, and specifies a genre corresponding to the event ID from the event information 3021. In addition, the visit target list display unit 321 narrows down spots extracted according to other search conditions to spots of which the business type matches the specified business type, and narrows down events extracted according to other search conditions to events of which the genre matches the specified genre.

In a case where designation of a utilization method of a user characteristic is included in the search condition, and the designated utilization method of the user characteristic is "not to conform to the user characteristic", the visit target list display unit 321 specifies the spot ID and the event ID included in the main action history of the user characteristic information 3051 of the user characteristic ID different from the user characteristic ID corresponding to the user, specifies the business type corresponding to the spot ID from the spot information 3011, and specifies the genre corresponding to the event ID from the event information 3021. In addition, the visit target list display unit 321 narrows down spots extracted according to other search conditions to spots of which the business type matches the specified business type, and narrows down events extracted according to other search conditions to events of which the genre matches the specified genre.

The visit target list display unit 321 may select, as the different user characteristic ID, the user characteristic ID of another cluster where a distance between coordinates is smallest in clustering with the cluster corresponding to the user characteristic ID corresponding to the user, may select the user characteristic ID of another cluster where the distance is farthest, may select the user characteristic IDs of all other clusters where the distance is equal to or less than a prescribed value, may select the user characteristic IDs of all other clusters where the distance is equal to or greater than the prescribed value, or may select the user characteristic ID where the distance is closest to the prescribed value.

The screen data generation unit 327 generates data of a list screen of the visit targets (search result) extracted in Step S1202, and the control unit 320 transmits data of the list screen to the user terminal 103 (S1203) . The control unit 1101 of the user terminal 103 receives the data of the list screen via the communication unit 1106, stores the data of the list screen in the storage unit 1102, analyzes the data of the list screen to generate visual information, and displays the generated visual information as the list screen on the display unit 1105.

The visit target list display unit 321 may display the visit targets extracted in Step S1202 based on an activity history of the related user of the user. Specifically, for example, the visit target list display unit 321 may acquire a visit history of the related user of the user from the spot visit history DB 312, and may set display priority of a visit target with a high visit frequency to be higher. In this case, the visit target list display unit 321 may set a weight of a related user to be higher as the intimacy with the user is higher and may count a visit frequency according to the weight or may acquire only a visit history of a user having the intimacy with the user equal to or greater than a prescribed value.

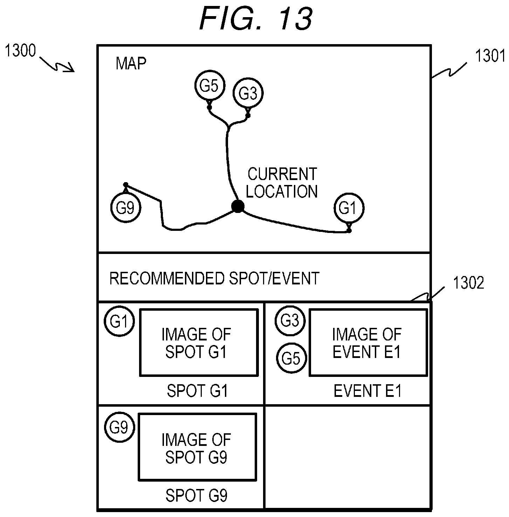

FIG. 13 is a diagram illustrating a screen configuration example of a list screen that is displayed on the display unit 1105. A list screen 1300 includes, for example, a display region 1301 indicating a position of a visit target (spot or event) and a display region 1302 indicating a list of overviews of visit targets.

In the display region 1301, for example, a map is displayed, and a point indicating a current location in the map and an icon indicating a center position of each visit target included in a search result are displayed. In a case where an event is included in the visit targets of the search result, as in FIG. 13, an icon indicating a center position of a related spot (in the example of FIG. 13, a spot G3 and a spot G5 are related spots of an event E1) of the event is displayed in the display region 1301. In a case where an event is included in the visit targets of the search result, instead of or in addition to the icon indicating the center position of the related spot of the event, an icon indicating a center position of the event may be displayed.

The display region 1302 is divided into, for example, regions of respective visit targets, and in each region, an icon of the visit target (in a case where the visit target is an event, a related spot), an image (a photograph or an animation that can image the spot or the event) of the visit target, and the name of the visit target are displayed. In each region, an address of a detail information screen of the visit target (spot, event, or related spot) is embedded. A connection destination of the address is set in, for example, the visit target list display unit 321, and as the format thereof, a uniform resource locator (URL) is used.

Returning to the description of FIGS. 12A and 12B, the visit target list display unit 321 determines whether the control unit 320 receives an access request (an example of selection information indicating a spot selected by the user) to the detail information of the spot from the user terminal 103 via the communication unit 330 (S1204). The control unit 1101 of the user terminal 103 analyzes an input operation from the user received by the input unit 1103, and as a result of the analysis, in a case where the input operation is a selection operation of a region corresponding to any spot on the display region 1302, a request for access to the address embedded in the region corresponding to the selected spot is transmitted. The transmitted request is the access request that is received by the visit target list display unit 321.

In a case where the visit target list display unit 321 determines that the access request to the detail information of the spot is received (S1204: YES), the screen data generation unit 327 generates data of a spot detail information screen for providing the detail information of the spot indicated by the access request (S1205).

The related user information acquisition unit 322 registers the related user information received from the contact management server 106 via the network 102 by the communication unit 330 in the related user information DB 314 (S1206). In Step S1206, the related user information is information regarding the related user of the user of the user terminal 103 having transmitted the access request in Step S1204.

The related user information acquisition unit 322 specifies the visit request information in which the spot ID of the spot indicated by the access request is included, from the visit request information DB 313 (S1207). The related user information acquisition unit 322 determines whether the visit request information of the related user of the user of the user terminal 103 having transmitted the access request is included in the specified visit request information of the spot ID (S1208).

In a case where the related user information acquisition unit 322 determines that there is the visit request information of the related user of the spot ID (S1208: YES), the control unit 320 determines whether an intention of the user to go to the spot is registered in the visit request information DB 313 according to a registration request for registering the intention (that is, whether correspondence of the user ID of the user and the spot ID of the spot is registered) or whether the registration request is received from the user terminal 103 of the user having transmitted the access request, via the communication unit 330 before a waiting time of a prescribed length elapses while the intention is not registered (S1209).

In a case where determination is made that the intention is registered or the registration request is received before the waiting time elapses (S1209: YES), the control unit 320 determines whether a time when the user wants to go to the spot is registered in the visit request information DB 313 according to a registration request for registering the time (that is, whether correspondence of the user ID of the user, the spot ID of the spot, and the visit request time other than "undesignated" is registered) or whether the registration request is received from the user terminal 103 of the user having transmitted the access request, via the communication unit 330 before a waiting time of a prescribed length elapses while the time is not registered (S1210).

In a case where determination is made that the time is registered or the registration request is received before the waiting time elapses (S1210: YES), the control unit 320 registers the visit request information in which the user ID of the user, the spot ID of the spot, and the time (visit request time) to go to the spot are linked, in the visit request information DB 313, and the joint visit likelihood calculation unit 323 calculates a joint visit likelihood of the user with each related user (S1211). In a case where at least one of the intention and the time is registered in the visit request information DB 313, in Step S1211, the registration of at least one of the intention and the time is omitted.

The joint visit likelihood indicates a probability that the user and the related user go to the spot together. The joint visit likelihood calculation unit 323 calculates the joint visit likelihood, for example, by substituting, in a prescribed function, at least one of the visit request times of the user and the related user to the spot, the last meeting date and time of the user and the related user, the intimacy of the user and the related user, the distance between the residences of the user and the related user, the last contact date and time of the user and the related user, and the distance between the coordinates in clustering of the user characteristics of the user and the related user. The last meeting date and time, the intimacy, the distance between the residences, the last contact date and time, and distance between the coordinates in clustering are an example of an index value indicating strength of a relationship between users.

For example, it is desirable that as the visit request times of the user and the related user to the spot are closer, as the last meeting date and time of the user and the related user is farther from the current time, as the intimacy of the user and the related user is higher, as the distance between the residences of the user and the related user is smaller, as the last contact date and time of the user and the related user is closer to the current time, and as the coordinates in clustering of the user characteristics of the user and the related user are closer, the joint visit likelihood calculated by the prescribed function is higher.

The ranking unit 325 ranks (priority in display) the related user of the user in a descending order of the joint visit likelihood (S1212). The screen data generation unit 327 adds information (an example of disclosure information regarding the related user) regarding an icon of the related user, a time when the related user wants to go, and a ranking given in Step S1212 to data of the spot detail information screen generated in Step S1205 (S1213).

The ranking unit 325 may filter related users in Step S1212. Specifically, for example, the ranking unit 325 may exclude, from information added in Step S1213, information regarding a related user of which the joint visit likelihood is less than a prescribed value, a related user of which the visit request time of the spot is not close to the user (the difference in visit request time is equal to or greater than a prescribed value), a related user of which a period from the current time to the last meeting date and time with the user is less than a prescribed value, a related user of which the intimacy with the user is less than a prescribed value, a related user of which the distance between the residences of the user and the related user is equal to or greater than a prescribed value, a related user of which a period from the current time to the last contact date and time with the user is equal to or greater than a prescribed value, and/or a related user of which the coordinates in clustering of the user characteristic is not close to the user (the distance between the clusters is equal to or greater than a prescribed value).

The control unit 320 transmits data of the spot detail information screen to which information is added or an event detail information screen described below to which information is added, to the user terminal 103 (S1214). The control unit 1101 of the user terminal 103 receives the data of the spot detail information screen or the event detail information screen, generates visual information based on the data as the spot detail information screen or the event detail information screen, and displays the visual information on the display unit 1105.

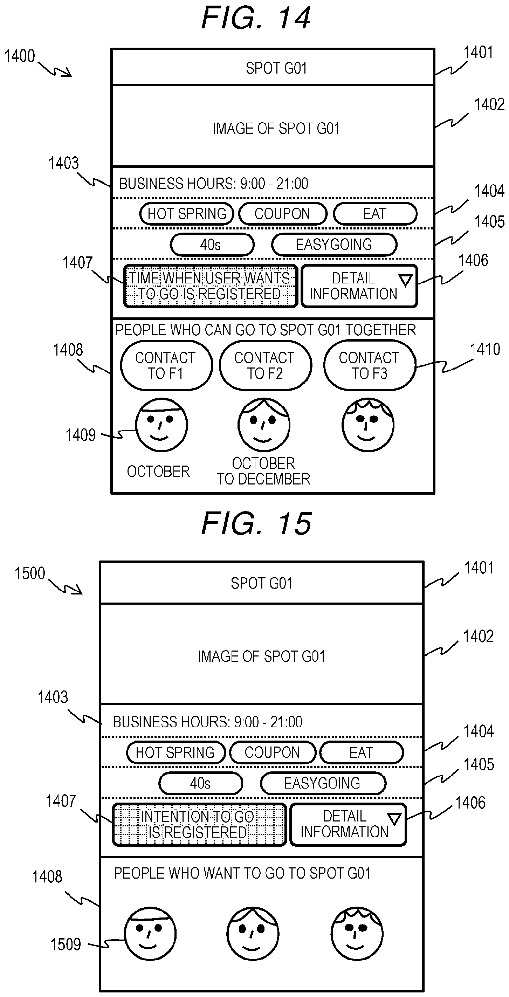

FIG. 14 is a diagram illustrating a screen configuration example of a spot detail information screen that is displayed on the display unit 1105. A spot detail information screen 1400 of FIG. 14 is generated based on screen data of Step S1213. With the spot detail information screen 1400 of FIG. 14, the user can confirm detail information of a spot G01, the presence of a related user who can go to the spot G01 together, and a time when the related user can go to the spot G01.

The spot detail information screen 1400 includes, for example, display regions 1401 to 1405, a pull-down 1406, a button 1407, and a display region 1408. In the display region 1401, a name of the spot G01 (a spot indicated by the access request) is displayed. In the display region 1402, an image (video or still image) of the spot G01 is displayed. In the display region 1403, business hours of the spot G01 are displayed.

In the display region 1404, a recommended viewpoint of the spot G01 is displayed. In the display region 1405, an age group of a user who stops by the spot G01 and other attributes are set. The pull-down 1406 is a pull-down for displaying a list of other kinds of information of the spot G01. All information displayed in the display regions 1401 to 1404 and the pull-down 1406 are generated from the spot information 3011 of the spot ID. Information displayed in the display region 1405 is generated, for example, from the user characteristic information 3051 that includes the spot G01 in the main action history.

The button 1407 is a button having a function of registering the intention of the user of the user terminal 103 on which the spot detail information screen 1400 is displayed, to go to the spot G01 and the time when the user of the user terminal 103 wants to go to the spot G01, and a function of displaying a registration state. In the example of the button 1407 of FIG. 14, the user's intention to go and the time to go are registered.

In the display region 1408, an icon 1409 and a button 1410 are displayed. The icon 1409 is an icon that is included in the user information of a related user who can go to the spot G01 together (the ranking given in Step S1212 is high (for example, within a prescribed order) or the joint visit likelihood is high (for example, equal to or greater than a prescribed value)). The button 1410 is a button having a function of indicating the name of the related user who can go to the spot G01 together, and making contact with the related user. In the display region 1408, information indicating the time when the related user indicated by each icon 1409 wants to go to the spot G01 is displayed. A related user of which the time is not displayed in conjunction with the icon 1409 is a user who wants to go to the spot G01 and does not designate the visit request time.

Returning to the description of FIG. 12B, in a case where determination is made that the time when the user wants to go to the spot is not registered, and the waiting time has elapsed while the registration request of the time when the user wants to go to the spot is not received (S1210: NO), the control unit 320 registers the visit request information (the visit request time may be a value of null or may be "undesignated") in which the user ID of the user and the spot ID of the spot are linked, in the visit request information DB 313, and the spot visit time estimation unit 326 determines whether the time when the user wants to go to the spot can be estimated (S1215).

For example, in a case where determination is made that a campaign is executed at the spot, based on the campaign information included in the spot information 3011 of the spot, the spot visit time estimation unit 326 determines that the time when the user wants to go to the spot can be estimated. In this case, the spot visit time estimation unit 326 assumes that the user is interested in the campaign, and estimates a period during which the campaign indicated by the campaign information is executed, as the time when the user wants to go to the spot.

For example, in a case where determination is made that the user visits the spot a prescribed number of times or more, with reference to the spot visit history DB 312, the spot visit time estimation unit 326 determines that the time when the user wants to go to the spot can be estimated, and acquires a visit history of the user to the spot from the spot visit history DB 312. In this case, the spot visit time estimation unit 326 analyzes a past visit tendency (for example, visit periodicity or seasonality) of the user to the spot based on the visit history, predicts a timing at which the user visits the spot next time, based on the analysis result, and estimates the predicted timing as the time when the user wants to go to the spot.

For example, in a case where determination is made that the user does not visit the spot a prescribed number of times or more, with reference to the spot visit history DB 312, but determination is made that another user who has a characteristic close to the user (for example, another user who has the same characteristic ID as the user or another user who has a characteristic ID of which the distance between the coordinates in clustering with the characteristic ID of the user is within a prescribed value) visits the spot a prescribed number of times or more, the spot visit time estimation unit 326 determines that the time when the user wants to go to the spot can be estimated, and acquires a visit history of another user to the spot from the spot visit history DB 312. In this case, the spot visit time estimation unit 326 analyzes a past visit tendency (for example, visit periodicity or seasonality) of another user to the spot based on the visit history, predicts a timing at which another user visits the spot next time, based on the analysis result, and estimates the predicted timing as the time when the user wants to go to the spot.

For example, in a case where determination is made that any condition as described above under which the time when the user wants to go to the spot can be estimated is not satisfied, the spot visit time estimation unit 326 determines that the time when the user wants to go to the spot cannot be estimated.

In a case where determination is made that the time when the user wants to go to the spot can be estimated (S1215: YES), the spot visit time estimation unit 326 assumes the time estimated by the method as described above as the visit request time of the user to the spot and proceeds to Step S1211. Note that, since the estimated time is merely an estimated value, the estimated time may not be registered in the visit request time of the visit request information.

In a case where determination is made that the time when the user wants to go to the spot can be estimated (S1215: YES), the spot visit time estimation unit 326 may notify the user terminal 103 of the user of an inquiry indicating whether the time estimated by the method as described above may be assumed as the visit request time of the user to the spot, and in a case where a response indicating approval to the inquiry from the user terminal 103 is obtained, may assume the estimated time as the visit request time of the user to the spot, and may proceed to Step S1211 (in this case, the estimated time may be registered in the visit request time of the visit request information). With this, the registration of the visit request time by the user is promoted, and a more accurate visit request time is obtained. In a case where a response indicating rejection to the inquiry from the user terminal 103 is obtained or in a case where a response is not obtained even when a prescribed time has elapsed, the spot visit time estimation unit 326 may proceed to processing of Step S1216 described below.

In a case where the spot visit time estimation unit 326 determines that the time when the user wants to go to the spot cannot be estimated (S1215: NO), the ranking unit 325 ranks the related user of the user based on the items included in the related user information 3141 corresponding to the user ID of the user (S1216).

The items of the related user information 3141 that are used to determine a ranking in Step S1216 include, for example, "group", "intimacy", "last contact date and time", "last meeting date and time", and/or "distance between residences". The ranking unit 325 may determine a ranking using only one item or may determine a ranking using a plurality of items among such items.

In a case of determining the ranking using a plurality of items, the ranking unit 325 may determine the ranking by sorting values of a plurality of items according to priority of the plurality of items or may determine the ranking according to a value obtained by substituting the plurality of items in a prescribed function. The items used for the ranking or the priority of a plurality of items may be set by the user or may be determined in advance.

For example, in a case where the "group" is identical, the ranking is influenced to be increased compared to a case where the "group" is different. For example, as the "intimacy" is higher, as the "last contact date and time" is closer to the current time, as the "last meeting date and time" is farther from the current time, and as the "distance between residences" is smaller, the ranking is influenced to be more increased. Similarly to Step S1212, filtering may be performed in parallel with ranking.

The screen data generation unit 327 adds information (an example of disclosure information regarding the related user) indicating the icon of the related user and the ranking given in Step S1216 to data of the spot detail information screen generated in Step S1205 (S1217), and proceeds to Step S1214.

FIG. 15 is a diagram illustrating a screen configuration example of a spot detail information screen that is displayed on the display unit 1105. A spot detail information screen 1500 of FIG. 15 is generated based on screen data of Step S1217. With the spot detail information screen 1500 of FIG. 15, the user can confirm the detail information of the spot G01 and the presence of the related user who can go to the spot G01 together.

In the configuration of the spot detail information screen 1500 of FIG. 15, description of similar portions to the spot detail information screen 1400 of FIG. 14 will be omitted, and different portions will be described. In FIG. 15, the button 1407 indicates a state in which the intention to go is registered (the time to go is not registered). In a case where the time to go is registered using the button 1407 of FIG. 15, the processing after Step S1211 is executed, and the spot detail information screen 1400 of FIG. 14 is displayed.

In the display region 1408, an icon 1509 is displayed. The icon 1509 is an icon that is included in the user information of the related user (the ranking given in Step S1216 is high (for example, within a prescribed order)) who wants to go to the spot G01.

Returning to the description of FIG. 12B, in a case where determination is made that the user's intention to go to the spot is not registered, and the waiting time has elapsed while the registration request of the user's intention to go to the spot is not received (S1209: NO), the control unit 320 extracts a group to which a related user satisfying the condition of Step S1208 belongs, from the related user information 3141 of the user included in the related user information DB 314, and counts the number of related users (related users who have the visit request information corresponding to the spot ID) who show an intention to go to the spot, for each extracted group (S1218).

The screen data generation unit 327 adds information (an example of the disclosure information regarding the related user) indicating the icon indicating the group extracted in Step S1218 and the number of related users who show an intention to go to the spot included in the group to data of the spot detail information screen generated in Step S1205 (S1219), and proceeds to Step S1214.

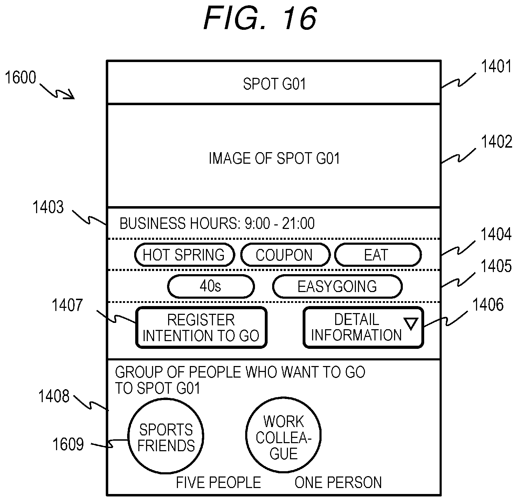

FIG. 16 is a diagram illustrating a screen configuration example of a spot detail information screen that is displayed on the display unit 1105. A spot detail information screen 1600 of FIG. 16 is generated based on screen data of Step S1219. With the spot detail information screen 1600 of the FIG. 16, the user can confirm the detail information of the spot G01 and the group of the related user who shows the intention to go to the spot G01.

In the configuration of the spot detail information screen 1600 of FIG. 16, description of similar portions to the spot detail information screen 1400 of FIG. 14 will be omitted, and different portions will be described. In FIG. 16, the button 1407 indicates a state in which an intention to go (and a time to go) is not registered. In a case where the intention to go is registered using the button 1407 of FIG. 16, the processing after Step S1210 is executed, and the spot detail information screen 1400 of FIG. 14 or the spot detail information screen 1500 of FIG. 15 is displayed.

In the display region 1408, an icon 1609 is displayed. The icon 1609 is an icon image in which a group name of the group including the related user who shows the intention to go to the spot G01 is visually recognized. The number of related users who want to go to the spot G01, of each group is displayed in conjunction with each icon 1609.

In the display region 1408, a display order of the icons 1609 of the groups may be an order according to the number of related users who show the intention to go to the spot G01 or may be an order according to an index value indicating the degree of importance of the group. The index value indicating the degree of importance of the group may be input in advance, for example, by the user of the user terminal 103 or may be determined in advance for each group name (type), or an average value or the like of the rankings of the related users belonging to the group calculated a similar method to Step S1216 may be used as the index value.

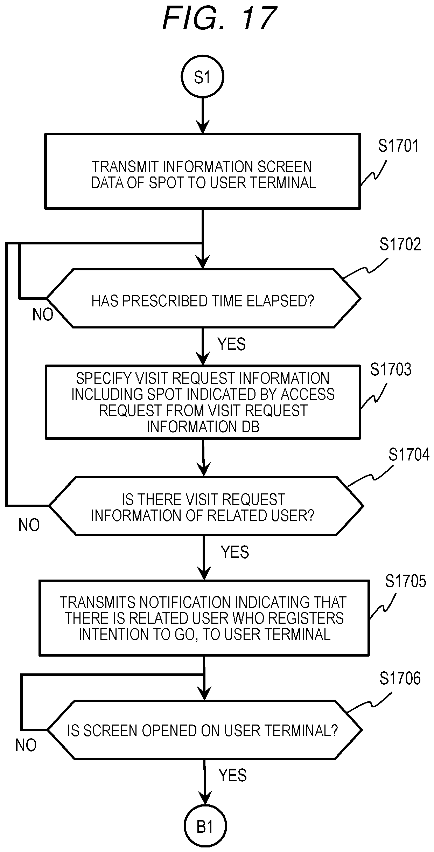

Returning to the description of FIG. 12A, in a case where the related user information acquisition unit 322 determines that there is no visit request information of the related user of the spot ID (S1208: NO), transition is made to processing of FIG. 17.

FIG. 17 is a flowchart illustrating an example of information providing processing in a case where there is no related user who requests to visit the spot selected by the user. The control unit 320 transmits data of the spot detail information screen generated in Step S1205 to the user terminal 103 (S1701). The control unit 1101 of the user terminal 103 receives the data of the spot detail information screen, generates visual information based on the data as the spot detail information screen, and displays the visual information on the display unit 1105.

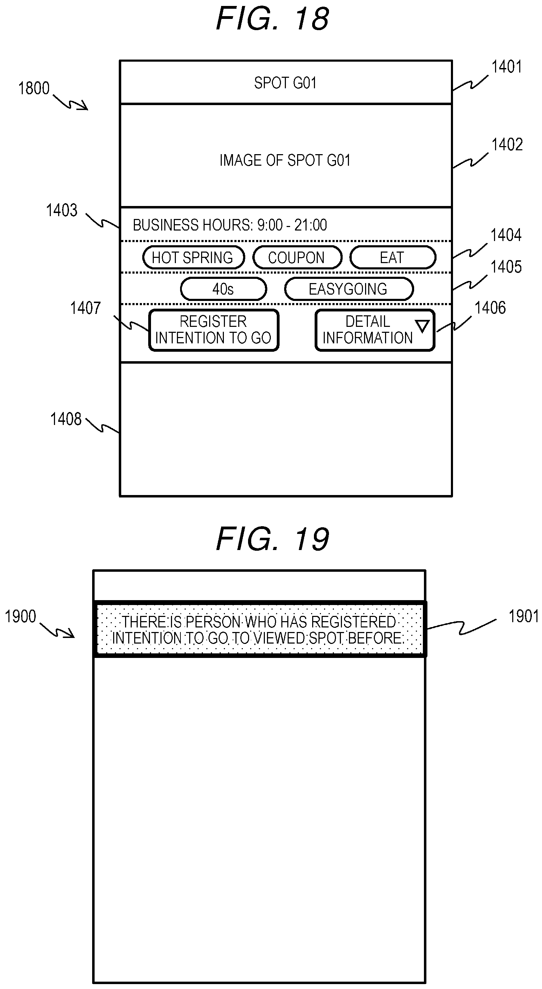

FIG. 18 is a diagram illustrating a screen configuration example of a spot detail information screen that is displayed on the display unit 1105. A spot detail information screen 1800 of FIG. 18 is generated based on screen data of Step S1701. With the spot detail information screen 1800 of FIG. 18, the user can confirm the detail information of spot G01.

In the configuration of the spot detail information screen 1800 of FIG. 18, description of similar portions to the spot detail information screen 1400 of FIG. 14 will be omitted, and different portions will be described. In FIG. 18, the button 1407 indicates a state in which an intention to go (and a time to go) is not registered. In a case where the intention to go and/or the time to go is registered using the button 1407 of FIG. 18, the visit request information of the user is registered. In a case where the user's intention to go/the time to go is registered, the button 1407 according to the registration status is displayed. Since there is not related user who has registered the intention to go to the spot G01, the display region 1408 is blank.

Returning to the description of FIG. 17, the control unit 320 waits until a prescribed time elapses after previous processing (the processing of Step S1701 or Step S1704) is executed (S1702). In a case where the control unit 320 determines that the prescribed time has elapsed (S1702: YES), the related user information acquisition unit 322 specifies the visit request information in which the spot ID of the spot indicated by the access request in Step S1204 is included, from the visit request information DB 313 (S1703).

The related user information acquisition unit 322 determines whether the visit request information of the related user of the user of the user terminal 103 having transmitted the access request is included in the specified visit request information of the spot ID (S1704). In a case where determination is made that there is no visit request information of the related user of the spot ID (S1704: NO), the related user information acquisition unit 322 proceeds to Step S1702.

In a case where the related user information acquisition unit 322 determines that there is the visit request information of the related user including the spot ID (S1704: YES), the control unit 320 transmits notification indicating that there is the related user who registers the intention to go, to the user terminal 103 of the user having transmitted the access request (S1705). The control unit 1101 of the user terminal 103 receives the notification, generates visual information based on the notification as the spot visit request notification screen, and displays the visual information on the display unit 1105.

FIG. 19 is a diagram illustrating a screen configuration example of a spot visit request notification screen that is displayed on the display unit 1105 of the user terminal 103. A spot visit request notification screen 1900 is a screen for giving notification that there is related user who has registered the intention to go to a spot viewed by the user.

The spot visit request notification screen 1900 includes a display region 1901. In the display region 1901, a message indicating that there is a related user who has registered an intention to go to a spot viewed by the user before is displayed. In a case where a time when the related user wants to go to the spot is registered, the message may include the user name of the related user. The message may include the user name of the related user regardless of whether the time when the related user wants to go to the spot is registered. In a case where the time when the related user wants to go to the spot is registered, the message may include the user name of the related user and/or the time.

For example, whether the spot visit request notification screen 1900 is displayed may be determined according to a registration status of the visit request information of the user to the spot. Specifically, for example, in a case where the visit request information of the user to the spot is not registered, since there is a high likelihood that the user does not have the intention to go to the spot, the display of the spot visit request notification screen 1900 may not be performed, and in a case where the visit request information of the user to the spot is registered, since the user has the intention to go to the spot, the display of the spot visit request notification screen 1900 may be performed. For example, a message that is displayed in the display region 1901 may be different according to the registration status of the visit request information of the user to the spot.

Returning to the description of FIG. 17, the control unit 320 waits until determination is made that any screen sent from the information processing apparatus 101 is opened by the user on the user terminal 103 to which the notification of Step S1705 is to be transmitted (Step S1706). The user terminal 103 transmits notification indicating that the screen is opened, to the information processing apparatus 101 in a case where the screen is opened, and the control unit 320 performs the determination in Step S1706 based on whether the notification is received. In a case where determination is made that the screen is opened on the user terminal 103 (S1706: YES), the control unit 320 proceeds to Step S1209 of FIG. 12B.

Returning to the description of FIG. 12A, in a case where the visit target list display unit 321 determines that the access request to the detail information of the spot is not received (S1204: NO), the control unit 320 determines whether an access request (an example of selection information indicating an event selected by the user) to the detail information of the event is received from the user terminal 103 via the communication unit 330 (S1221).

The control unit 1101 of the user terminal 103 analyzes an input operation from the user received by the input unit 1103, and as a result of the analysis, in a case where the input operation is a selection operation of a region corresponding to any event on the display region 1302, a request for access to an address embedded in the region corresponding to the selected event is transmitted.

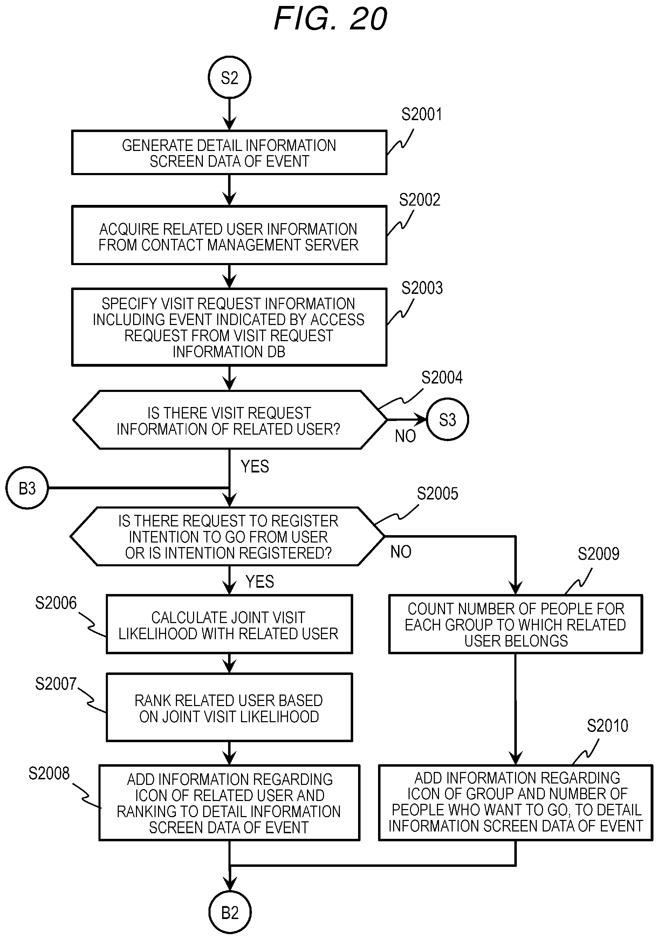

In a case where determination is made that the access request to the detail information of the event is not received (S1221: NO), the visit target list display unit 321 returns to Step S1204. In a case where determination is made that the access request to the detail information of the event is received (S1221: YES), the visit target list display unit 321 proceeds to processing of FIG. 20.

FIG. 20 is a flowchart illustrating an example of information providing processing in a case where an access request to detail information of an event is made. The visit target list display unit 321 generates data of an event detail information screen for providing the detail information of the event indicated by the access request in Step S1221 (S2001).

The related user information acquisition unit 322 registers the related user information received from the contact management server 106 via the network 102 by the communication unit 330 in the related user information DB 314 (S2002). In Step S2002, the related user information is information regarding a related user of the user of the user terminal 103 having transmitted the access request in Step S1221.

The related user information acquisition unit 322 specifies the visit request information in which the event ID of the event indicated by the access request in Step S1221 is included, from the visit request information DB 313 (S2003). The related user information acquisition unit 322 determines whether the visit request information of the related user of the user of the user terminal 103 having transmitted the access request in Step S1221 is included in the specified visit request information of the event ID (S2004).

In a case where the related user information acquisition unit 322 determines that there is the visit request information of the related user of the event ID (S2004: YES), the control unit 320 determines whether a user's intention to go to the event is registered in the visit request information DB 313 according to a registration request for registering the intention (that is, whether correspondence of the user ID of the user and the event ID of the event is registered) or whether the registration request is received from the user terminal 103 of the user having transmitted the access request via the communication unit 330 before a waiting time of a prescribed length elapses while the intention is not registered (S2005).

In a case where determination is made that the intention is registered or determination is made that the registration request is received before the waiting time elapses (S2005: YES), the control unit 320 registers visit request information in which the user ID of the user and the event ID of the event are linked, in the visit request information DB 313, and the joint visit likelihood calculation unit 323 calculates a joint visit likelihood of the user with each related user (S2006). In a case where the intention is registered in the visit request information DB 313, in Step S2006, the registration of the visit request information is omitted. The calculation processing of the joint visit likelihood in Step S2006 is similar to Step S1211, but is different from Step S1211 in that the visit request time is not used in the calculation of the joint visit likelihood in Step S2006.

The ranking unit 325 ranks the related users of the user in a descending order of the joint visit likelihood calculated in Step S2006 (S2007). Instead of the calculation processing of the joint visit likelihood and the ranking processing in Steps S2006 and S2007, ranking processing based on the related user information 3141 similar to Step S1216 may be executed. Similarly to Step S1212, filtering may be performed in parallel with ranking.

The screen data generation unit 327 adds information (an example of the disclosure information regarding the related user) indicating the icon of the related user and the ranking given in Step S2007 to data of the event detail information screen generated in Step S2001 (S2008), and proceeds to Step S1214 of FIG. 12B. Since the event has a limited holding period and a visit is possible only during the holding period, in a case where the access request to the detail information of the event is transmitted, unlike the processing in a case where the access request to the detail information of the spot is transmitted, a registration request of the time to go to the event is not received, and a time to go to the event is not estimated.

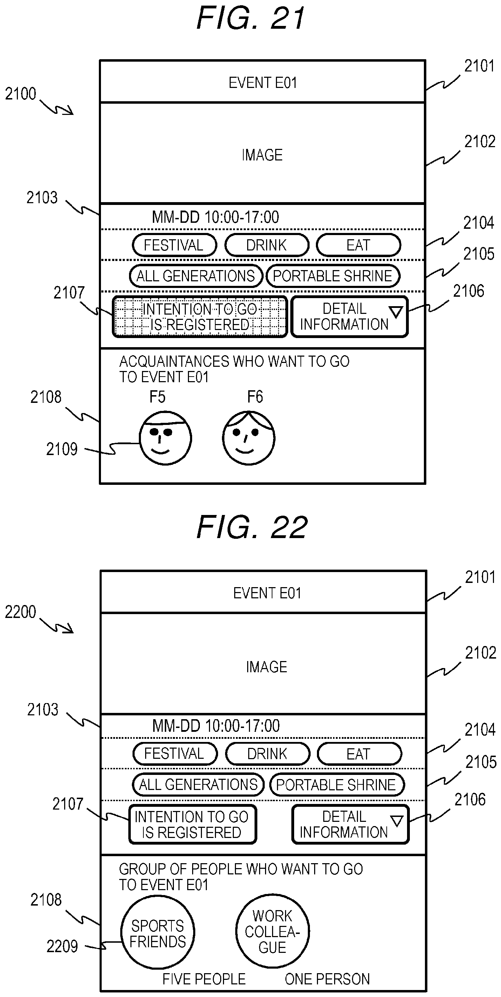

FIG. 21 is a diagram illustrating a screen configuration example of an event detail information screen that is displayed on the display unit 1105. An event detail information screen 2100 of FIG. 21 is generated based on screen data of Step S2008. With the event detail information screen 2100 of FIG. 21, the user can confirm detail information of an event E01 and the presence of a related user who can go to the event E01 together.

The event detail information screen 2100 includes, for example, display regions 2101 to 2105, a pull-down 2106, a button 2107, and a display region 2108. In the display region 2101, a name of the event E01 (an event indicated by the access request) is displayed. In the display region 2102, an image (video or still image) of the event E01 is displayed. In the display region 2103, business hours (for example, a time indicated in the holding period of the event information 3021) of the event E01 are displayed.

In the display region 2104, a recommended viewpoint of the event E01 is displayed. In the display region 2105, an age group of a user who stops by the event E01 and other attributes are set. The pull-down 2106 is a pull-down for displaying a list of other kinds of information of the event E01. All information that is displayed in the display regions 2101 to 2104 and the pull-down 2106 are generated from the event information 3021 of the event ID. Information that is displayed in the display region 2105 is generated, for example, from the user characteristic information 3051 that includes the event E01 (or a related spot of the event E01) in the main action history.

The button 2107 is a button having a function of registering an intention of the user of the user terminal 103 on which the event detail information screen 2100 is displayed, to go to the event E01 and a function of displaying a registration state. In the example of the button 2107 of FIG. 21, the user's intention to go is registered.

In the display region 2108, an icon 2109 is displayed. The icon 2109 is an icon that is included in the user information of a related user who wants to go to the event E01 (the ranking given in Step S2007 is high (for example, within a prescribed order)). In the display region 2108, a user name of the related user indicated by each icon 2109 is displayed.

Returning to the description of FIG. 20, in a case where determination is made that the user's intention to go to the event is not registered and the waiting time has elapsed while the registration request of the intention to go to the event is not received (S2005: NO), the control unit 320 extracts a group to which a related user satisfying the condition of Step S2004 belongs, from the related user information 3141 of the user included in the related user information DB 314, and counts the number of related users (related users who have the visit request information corresponding to the event ID) who show an intention to go to the event, for each extracted group (S2009).

The screen data generation unit 327 adds information (an example of the disclosure information regarding the related user) indicating an icon of the group extracted in Step S2009 and the number of related users who show the intention to go to the event included in the group, to data of the event detail information screen generated in Step S2001 (S2010), and proceeds to Step S1214.

FIG. 22 is a diagram illustrating a screen configuration example of an event detail information screen that is displayed on the display unit 1105. An event detail information screen 2200 of FIG. 22 is generated based on screen data of Step S2010. With the event detail information screen 2200 of FIG. 20, the user can confirm the detail information of the event E01 and the group of the related user who shows the intention to go to the event E01.

In the configuration of the event detail information screen 2200 of FIG. 22, description of similar portions to the event detail information screen 2100 of FIG. 21 will be omitted, and different portions will be described. A button 2107 in FIG. 22 indicates a state in which the intention to go (and the time to go) is not registered. If the intention to go is registered using the button 2107 of FIG. 22, the processing after Step S2006 is executed, and the event detail information screen 2100 of FIG. 21 is displayed.

In the display region 2108, an icon 2209 is displayed. The icon 2209 is an icon image in which a group name of the group including the related user who shows the intention to go to the event E01 can be visually recognized. The number of related users who want to go to the event E01, of each group is displayed in conjunction with each icon 2209.

A display order of the icons 2209 of the groups in the display region 2108 may be an order according to the number of related users who show the intention to go to the event E01 or may be an order according to an index value indicating the degree of importance of the group.

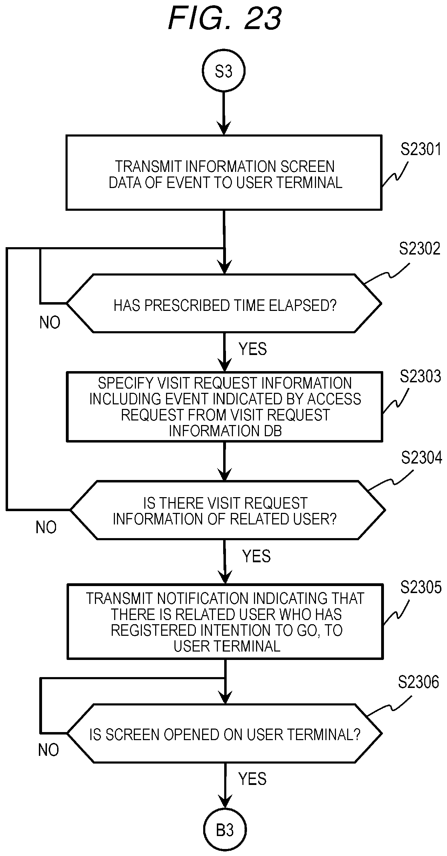

Returning to the description of FIG. 20, in a case where the related user information acquisition unit 322 determines that there is no visit request information of the related user of the event ID (S2004: NO), transition is made to processing of FIG. 23.

FIG. 23 is a flowchart illustrating an example of information providing processing in a case where there is no related user who requests to visit an event selected by the user. The control unit 320 transmits data of the event detail information screen generated in Step S2001 to the user terminal 103 (S2301). The control unit 1101 of the user terminal 103 receives the data of the event detail information screen, generates visual information based on the data as the event detail information screen, and displays the visual information on the display unit 1105.

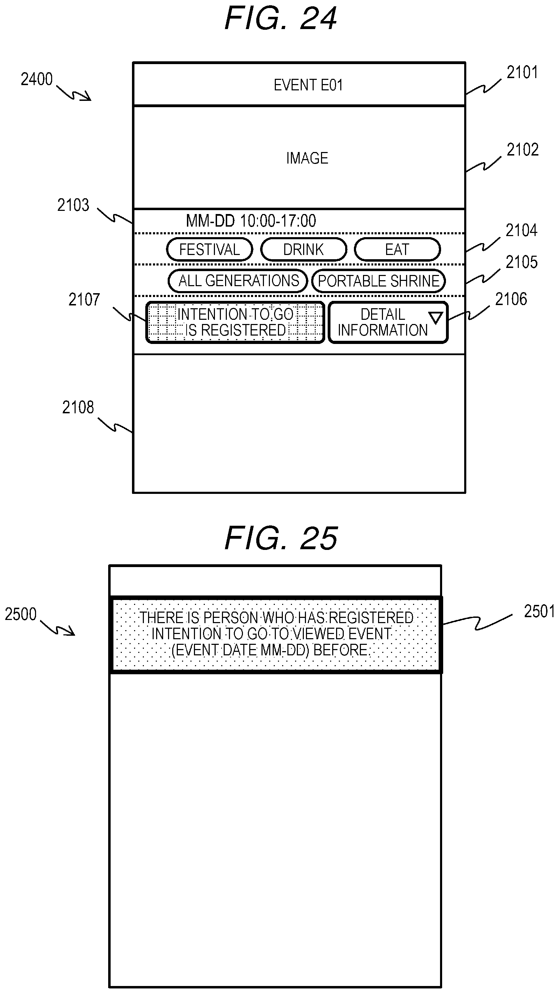

FIG. 24 is a diagram illustrating a screen configuration example of an event detail information screen that is displayed on the display unit 1105. An event detail information screen 2400 of FIG. 24 is generated based on screen data of Step S2301. With the event detail information screen 2400 of FIG. 24, the user can confirm the detail information of the event E01.

In the configuration of the event detail information screen 2400 of FIG. 24, description of similar portions to the event detail information screen 2100 of FIG. 21 will be omitted, and different portions will be described. A button 2107 in FIG. 24 indicates a state in which the intention to go is registered. In a case where the intention to go is not registered, "register intention to go" or the like is displayed in the button 2107 of FIG. 24, and in a case where the intention to go is registered using the button 2107, the visit request information of the user is registered. In addition, since there is no related user who has registered the intention to go to the event E01, the display region 2108 is blank.

Returning to the description of FIG. 23, the control unit 320 waits until a prescribed time elapses after previous processing (the processing of Step S2301 or S2304) is executed (S2302). In a case where the control unit 320 determines that the prescribed time has elapsed (S2302: YES), the related user information acquisition unit 322 specifies the visit request information in which the event ID of the event indicated by the access request in Step S1221 is included, from the visit request information DB 313 (S2303). Note that, in Step S2302, in a case where the holding period indicated by the event information 3021 of the event ends at the time when the prescribed time has elapsed, the processing after Step S2303 is stopped.

The related user information acquisition unit 322 determines whether the visit request information of the related user of the user of the user terminal 103 having transmitted the access request is included in the specified visit request information of the event ID (S2304). In a case where determination is made that there is no visit request information of the related user including the event ID (S2304: NO), the related user information acquisition unit 322 returns to Step S2302.

In a case where the related user information acquisition unit 322 determines that there is the visit request information of the related user including the event ID (S2304: YES), the control unit 320 transmits notification indicating that there is a related user who has registered the intention to go, to the user terminal 103 of the user having transmitted the access request (S2305). The control unit 1101 of the user terminal 103 receives the notification, generates visual information based on the notification as the event visit request notification screen, and displays the visual information on the display unit 1105.

FIG. 25 is a diagram illustrating a screen configuration example of an event visit request notification screen that is displayed on the display unit 1105 of the user terminal 103. An event visit request notification screen 2500 is a screen for giving notification that there is a related user who has registered an intention to go to an event viewed by the user.

The event visit request notification screen 2500 includes a display region 2501. In the display region 2501, a message indicating that there is a related user who has registered an intention to go to an event viewed by the user before is displayed. The message may include a user name of the related user.

For example, whether the event visit request notification screen 2500 is displayed may be determined according to a registration status of the visit request information of the user to the event. Specifically, for example, in a case where the visit request information of the user to the event is not registered, since there is a high likelihood that the user does not have the intention to go to the event, the display of the event visit request notification screen 2500 may not be performed, and in a case where the visit request information of the user to the event is registered, since the user has the intention to go to the event, the display of the event visit request notification screen 2500 may be performed. For example, a message that is displayed in the display region 2501 may be different according to the registration status of the visit request information of the user to the event.

Returning to the description of FIG. 23, the control unit 320 waits until determination is made that any screen sent from the information processing apparatus 101 is opened by the user on the user terminal 103 to which the notification of Step S2305 is to be transmitted (Step S2306) . The user terminal 103 transmits notification indicating that the screen is opened, to the information processing apparatus 101 in a case where the screen is opened, and the control unit 320 performs the determination in Step S2306 based on whether the notification is received. In a case where the control unit 320 determines that the screen is opened on the user terminal 103 (S2306: YES), transition is made to Step S2005 of FIG. 20.

As described above, the information providing system 100 of the present example displays information regarding a visit request to the visit target of the related user in a case where the user accesses to the detail information of the visit target. With this, the user can obtain information regarding the related user who has a visit request to the visit target that is concerned about by the user, and consequently, can lead to a conversation about a visit to the visit target together with the related user to obtain the motivation to the visit. In this way, information provision to one user leads to outing of a plurality of people. In addition, since the related user is a user who interacts with the user, it is possible to give the user stronger motivation to a visit to the visit target.

In particular, the information providing system 100 changes the degree (the size of the range of information to be disclosed to the user) of disclosure of the disclosure information regarding the related user who has the intention of the visit request according to the registration status of the visit request information of the user regarding the visit target (that is, according to the degree of disclosure of the intention of the visit request of the user to the visit target (the size of the range of information to be disclosed to the related user)).

Specifically, for example, the information providing system 100 performs the following information provision. The information providing system 100 displays information regarding the group to which the related user who has the intention to go to the visit target belongs, in a case where the user's intention to go to the visit target is not registered. The information providing system 100 displays information indicating the related user who has the intention to go to the visit target, in a case where the user's intention to go to the visit target is registered. The information providing system 100 provides information indicating the related user who has the intention to go to the visit target and the time when the related user wants to go to the visit target, in a case where the user's intention to go to the visit target and the time when the user wants to go to the visit target are registered.

The information providing system 100 can obtain more information of the user and easily acquires the detailed visit request information of a number of users by providing the user with more information as the number of registration items of the visit request information regarding the visit target of the user is greater.

On the other hand, while the information providing system 100 changes the degree of disclosure of the disclosure information regarding the related user who has the intention of the visit request, according to the degree of disclosure of the user's intention of the visit request to the visit target, contrary to the above-described example, more information may be provided to the user as the number of registration items of the visit request information regarding the visit target of the user is smaller. With this, for example, since more detailed information such as the related user who has the intention to go to the visit target and the time when the related user wants to go to the visit target is provided to a user who does not an intention to go to the visit target, it is possible to motivate the user to visit the visit target.

The information providing system 100 of the present example can motivate the user to visit the visit target by providing the user with information indicating the appearance of the related user in a case where there is no related user who has the intention to go to the visit target corresponding to the detail information when the user accesses the detail information, and thereafter, a related user who has the intention to go to the visit target appears.

The invention is not limited to the above-described embodiment, and encompasses various modification examples and the equivalent configurations within the scope of the appended claims. For example, the above-described embodiment is described in detail for a better understanding of the invention, and the invention is not necessarily limited to what includes all the configurations that have been described. Furthermore, some of the configurations of a certain embodiment may be replaced with the configurations of another embodiment. In addition, the configurations of another embodiment may be added to the configurations of a certain embodiment. In addition, some of the configurations of each embodiment may be added to, deleted from, or replaced with another configuration.

For example, in Steps S1212, S1216, and S2007, a ranking may be given using user style information indicating the style of the user for information of the visit target.

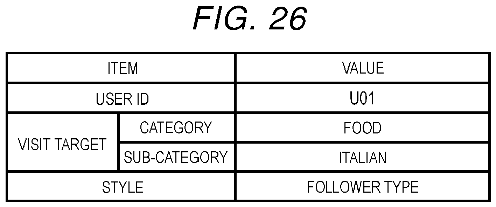

FIG. 26 is a diagram illustrating a data configuration example of user style information. The user style information indicates "category" and "sub-category" of a visit target, and "style" of a user for the visit target corresponding to the "category" and the "sub-category", of each user ID. The style represents, for example, an attitude regarding transmission of information to the related user by the user and is set for each "category" and "sub-category". The attitude regarding transmission of information includes, for example, an influencer and a follower. An influencer user recognizes the characteristic of the visit target corresponding to the "category" and the "sub-category" and tends to provide a recommendation or evaluation information to the related user. A follower user tends to visit the visit target corresponding to the "category" and the "sub-category" based on information provided from the influencer user. In the "style", a value of influencer or follower is stored.

For example, in the above-described processing of ranking, in a case where the "category" and/or "sub-category" included in the user style information of the related user to be ranked is included in (a company, a genre, or the like of) the spot information 3011 or the event information 3021 corresponding to the visit target corresponding to the access request, and the "style" included in the user style information is different between the user and the related user (for example, in a case where the "style" included in the user style information of the user is the follower, and the "style" included in the user style information of the related user is the influencer or in a case where the "style" included in the user style information of the user is the influencer, and the "style" included in the user style information of the related user is the follower), the ranking unit 325 may influence to increase the ranking of the related user. With this, the related user of a different style is displayed with priority.

As the search condition in Step S1202, a condition for searching for only a spot that a related user of a specific group set by the user can go within a time set by the user can also be designated.

In addition, some or all of the above-described configurations, functions, processing units, processing means, and the like may be realized in terms of hardware, for example, by designing an integrated circuit or may be realized in terms of software by the processor interpreting and executing programs that realize the respective functions. Information such as programs, tables, and files that realize the respective functions can be stored in a storage device such as a memory, a hard disk, or a solid state drive (SSD) or a recording medium such as an integrated circuit (IC) card, an SD card, or a digital versatile disc (DVD).

In addition, control lines or information lines that are assumed to be necessary for the purpose of explanation are described, and not all of the control lines or the information lines that are necessary in terms of implementation are described. Actually, it may be considered that almost all the configurations are connected to one another.

## Claims

1. An information providing apparatus comprising:
a processor; and
a memory,
wherein the memory is configured to
store selection information indicating a visit target selected by a first user, and
visit request information indicating a visit target that each of the first user and a related user who has a relationship with the first user requests to visit, and
the processor is configured to
specify a related user who requests to visit the selected visit target, from the visit request information,
generate disclosure information regarding the specified related user, the disclosure information being disclosed to the first user to a degree of disclosure according to a registration status regarding the selected visit target of the first user in the visit request information, and
generate data for displaying the generated disclosure information.

2. The information providing apparatus according to claim 1,
wherein the processor is configured to include information indicating the specified related user in the disclosure information in a case where determination is made that correspondence of the first user and the selected visit target is registered in the visit request information.

3. The information providing apparatus according to claim 2,
wherein the visit target includes a first visit target to which a visit is possible regardless of a period,
the selection information indicates whether the selected visit target is the first visit target,
the visit request information indicates a visit request time to the first visit target that each of the first user and the related user requests to visit, and
the processor is configured to
in a case where determination is made based on the selection information that the selected visit target is the first visit target, and determination is made that correspondence of the first user, the selected visit target, and the visit request time to the selected visit target is registered in the visit request information,
acquire a visit request time of the specified related user to the selected visit target from the visit request information, and
include information indicating the specified related user and the acquired visit request time in the disclosure information.

4. The information providing apparatus according to claim 2 or 3,
wherein the memory is configured to store information regarding an index value indicating strength of a relationship between the first user and the related user, and
the processor is configured to
calculate, based on the index value between the first user and the specified related user, a probability that the first user and the specified related user are able to visit the selected visit target together, and
determine, based on the calculated probability, a priority of display of the specified related user in displaying the generated disclosure information.

5. The information providing apparatus according to claim 4,
wherein the memory is configured to
store cluster information indicating a cluster generated based on a history of activity of a user and a distance between the clusters, and
user information indicating a cluster to which each of the first user and the related user belongs, and
the index value between the first user and the specified related user includes a distance between the cluster to which the first user belongs and the cluster to which the specified related user belongs.

6. The information providing apparatus according to claim 4,
wherein the memory is configured to store information indicating date and time on which the first user has met the related user last time, and
the index value between the first user and the specified related user includes a difference between a current time and the date and time on which the first user has met the specified related user last time.

7. The information providing apparatus according to claim 4,
wherein the memory is configured to store information indicating a distance between a residence of the first user and a residence of the related user, and
the index value between the first user and the specified related user includes the distance between the residence of the first user and the residence of the specified related user.

8. The information providing apparatus according to claim 3,
wherein the processor is configured to
calculate a probability that the first user and the specified related user are able to visit the selected visit target together, based on a difference between a visit request time of the first user to the selected visit target and the visit request time of the specified related user to the selected visit target, and
determine priority of display of the specified related user in displaying the generated disclosure information, based on the calculated probability.

9. The information providing apparatus according to claim 8,
wherein information indicating a visit history of the first user to the visit target is stored,
in a case where determination is made based on the selection information that the selected visit target is the first visit target, and determination is made that correspondence of the first user and the selected visit target is registered in the visit request information, but the visit request time of the first user to the selected visit target is not registered in the visit request information,
an estimated value of the visit request time of the first user to the selected visit target is calculated based on the visit history of the first user to the selected visit target, and
the probability is calculated while regarding the calculated estimated value as the visit request time of the first user to the selected visit target.

10. The information providing apparatus according to claim 1,
wherein the processor is configured to include information indicating the number of specified related users in the disclosure information in a case where determination is made that correspondence of the first user and the selected visit target is not registered in the visit request information.

11. The information providing apparatus according to claim 1,
wherein the processor is configured to
in a case where determination is made that there is no related user who requests to visit the selected visit target, with reference to the visit request information,
determine whether there is a related user who requests to visit the selected visit target, with reference to the visit request information at a prescribed timing after determination is made that there is no related user who requests to visit the selected visit target, and
generate data for displaying notification information for giving a notification that there is the related user in a case where determination is made at the prescribed timing that there is the related user who requests to visit the selected visit target.

12. The information providing apparatus according to claim 11,
wherein the visit target includes a second visit target to which a visit is possible only in a specific period,
the selection information indicates whether the selected visit target is the second visit target,
the memory is configured to store information indicating a period during which a visit to the second visit target is possible,
the processor is configured to determine whether the selected visit target is the second visit target, based on the selection information, and
the prescribed timing in a case where the selected visit target is the second visit target is after the processor determines that there is no related user who requests to visit the selected visit target and before the period during which the visit to the selected visit target is possible ends.

13. The information providing apparatus according to claim 1,
wherein the memory is configured
store visit target information indicating the visit target,
store cluster information indicating a cluster generated based on a history of activity of a user, a main visit target in a visit history of a user who belongs to the cluster, and a distance between the clusters, and
user information indicating a cluster to which the first user belongs,
the processor is configured to
select a cluster based on a distance from the clusters indicated by the cluster information to the cluster to which the first user belongs,
specify the main visit target corresponding to the selected cluster, from the cluster information, and
generate data for displaying the specified main visit target, and
the visit target indicated by the selection information includes a visit target selected from the specified main visit target.

14. The information providing apparatus according to claim 1,
wherein the memory is configured to store user style information indicating a style of each of the first user and the related user with respect to the visit target,
the style indicates an attitude regarding transmission of information regarding the visit target to a related user of a user by the user, and
the processor is configured to
specify the styles of the first user and the specified related user from the user style information,
determine priority of display of the specified related user in displaying the generated disclosure information, based on the styles of the first user and the specified related user, and
set the priority of the specified related user of a style different from the style of the first user to be higher.

15. An information providing method by an information providing apparatus,
wherein the information providing apparatus includes a processor and a memory,
the memory is configured to
store selection information indicating a visit target selected by a first user, and
visit request information indicating a visit target that each of the first user and a related user who has a relationship with the first user requests to visit, and
the information providing method comprises:
at the processor, specifying specifies a related user who requests to visit the selected visit target, from the visit request information;
at the processor, generating disclosure information regarding the specified related user, the disclosure information being disclosed to the first user to a degree of disclosure according to a registration status regarding the selected visit target of the first user in the visit request information; and
at the processor, generating data for displaying the generated disclosure information.

## Amended claims

### Amended claims in accordance with Rule 137(2) EPC.

1. An information providing apparatus comprising:
a processor (201); and
a memory (202, 300) configured to
register in advance in a related user information database (314) a first user and a related user who has a relationship with said first user,
store selection information indicating a visit target selected by said first user, and
store visit request information in a visit request information database (313) indicating a visit target that each of the first user and the related user requests to visit, and
the processor (201) is configured to
specify the related user who requests to visit the selected visit target, from the visit request information,
generate disclosure information regarding the specified related user, the disclosure information being disclosed to the first user to a degree of disclosure according to a registration status regarding the selected visit target of the first user in the visit request information, and
generate data for displaying the generated disclosure information,
wherein the processor (201) is configured to include information indicating the specified related user in the disclosure information in a case where determination is made that correspondence of the first user and the selected visit target is registered in the visit request information,
wherein the memory (202, 300) is configured to store information regarding an index value indicating strength of a relationship between the first user and the related user, and
the processor (201) is configured to
calculate, based on the index value between the first user and the specified related user, a probability that the first user and the specified related user are able to visit the selected visit target together, and
determine, based on the calculated probability, a priority of display of the specified related user in displaying the generated disclosure information.

2. The information providing apparatus according to claim 1,
wherein the visit target includes a first visit target to which a visit is possible regardless of a period,
the selection information indicates whether the selected visit target is the first visit target,
the visit request information indicates a visit request time to the first visit target that each of the first user and the related user requests to visit, and
the processor is configured to
in a case where determination is made based on the selection information that the selected visit target is the first visit target, and determination is made that correspondence of the first user, the selected visit target, and the visit request time to the selected visit target is registered in the visit request information,
acquire a visit request time of the specified related user to the selected visit target from the visit request information, and
include information indicating the specified related user and the acquired visit request time in the disclosure information.

3. The information providing apparatus according to claim 1,
wherein the memory is configured to
store cluster information indicating a cluster generated based on a history of activity of a user and a distance between the clusters, and
user information indicating a cluster to which each of the first user and the related user belongs, and
the index value between the first user and the specified related user includes a distance between the cluster to which the first user belongs and the cluster to which the specified related user belongs.

4. The information providing apparatus according to claim 1,
wherein the memory is configured to store information indicating date and time on which the first user has met the related user last time, and
the index value between the first user and the specified related user includes a difference between a current time and the date and time on which the first user has met the specified related user last time.

5. The information providing apparatus according to claim 1,
wherein the memory is configured to store information indicating a distance between a residence of the first user and a residence of the related user, and
the index value between the first user and the specified related user includes the distance between the residence of the first user and the residence of the specified related user.

6. The information providing apparatus according to claim 2,
wherein the processor is configured to
calculate a probability that the first user and the specified related user are able to visit the selected visit target together, based on a difference between a visit request time of the first user to the selected visit target and the visit request time of the specified related user to the selected visit target, and
determine priority of display of the specified related user in displaying the generated disclosure information, based on the calculated probability.

7. The information providing apparatus according to claim 6,
wherein information indicating a visit history of the first user to the visit target is stored,
in a case where determination is made based on the selection information that the selected visit target is the first visit target, and determination is made that correspondence of the first user and the selected visit target is registered in the visit request information, but the visit request time of the first user to the selected visit target is not registered in the visit request information,
an estimated value of the visit request time of the first user to the selected visit target is calculated based on the visit history of the first user to the selected visit target, and
the probability is calculated while regarding the calculated estimated value as the visit request time of the first user to the selected visit target.

8. The information providing apparatus according to claim 1,
wherein the processor is configured to include information indicating the number of specified related users in the disclosure information in a case where determination is made that correspondence of the first user and the selected visit target is not registered in the visit request information.

9. The information providing apparatus according to claim 1,
wherein the processor is configured to
in a case where determination is made that there is no related user who requests to visit the selected visit target, with reference to the visit request information,
determine whether there is a related user who requests to visit the selected visit target, with reference to the visit request information at a prescribed timing after determination is made that there is no related user who requests to visit the selected visit target, and
generate data for displaying notification information for giving a notification that there is the related user in a case where determination is made at the prescribed timing that there is the related user who requests to visit the selected visit target.

10. The information providing apparatus according to claim 9,
wherein the visit target includes a second visit target to which a visit is possible only in a specific period,
the selection information indicates whether the selected visit target is the second visit target,
the memory is configured to store information indicating a period during which a visit to the second visit target is possible,
the processor is configured to determine whether the selected visit target is the second visit target, based on the selection information, and
the prescribed timing in a case where the selected visit target is the second visit target is after the processor determines that there is no related user who requests to visit the selected visit target and before the period during which the visit to the selected visit target is possible ends.

11. The information providing apparatus according to claim 1,
wherein the memory is configured
store visit target information indicating the visit target,
store cluster information indicating a cluster generated based on a history of activity of a user, a main visit target in a visit history of a user who belongs to the cluster, and a distance between the clusters, and
user information indicating a cluster to which the first user belongs,
the processor is configured to
select a cluster based on a distance from the clusters indicated by the cluster information to the cluster to which the first user belongs,
specify the main visit target corresponding to the selected cluster, from the cluster information, and
generate data for displaying the specified main visit target, and
the visit target indicated by the selection information includes a visit target selected from the specified main visit target.

12. The information providing apparatus according to claim 1,
wherein the memory is configured to store user style information indicating a style of each of the first user and the related user with respect to the visit target,
the style indicates an attitude regarding transmission of information regarding the visit target to a related user of a user by the user, and
the processor is configured to
specify the styles of the first user and the specified related user from the user style information,
determine priority of display of the specified related user in displaying the generated disclosure information, based on the styles of the first user and the specified related user, and
set the priority of the specified related user of a style different from the style of the first user to be higher.

13. An information providing method by an information providing apparatus,
wherein the information providing apparatus includes a processor (201) and a memory (202, 300) that stores
in advance a first user and a related user who has a relationship with said first user,
selection information indicating a visit target selected by the first user, and
visit request information indicating a visit target that each of the first user and the related user requests to visit, and
the information providing method comprises:
at the processor (201), specifying the related user who requests to visit the selected visit target, from the visit request information;
at the processor (201), generating disclosure information regarding the specified related user, the disclosure information being disclosed to the first user to a degree of disclosure according to a registration status regarding the selected visit target of the first user in the visit request information;
at the processor (201), generating data for displaying the generated disclosure information,
at the processor (201), including information indicating the specified related user in the disclosure information in a case where determination is made that correspondence of the first user and the selected visit target is registered in the visit request information,
in the memory (202, 300), storing information regarding an index value indicating strength of a relationship between the first user and the related user, and
at the processor (201)
calculating, based on the index value between the first user and the specified related user, a probability that the first user and the specified related user are able to visit the selected visit target together, and
determining, based on the calculated probability, a priority of display of the specified related user in displaying the generated disclosure information.
